(19) Europäisches Patentamt
European Patent Office
Office européen des brevets

(11) **EP 3 197 060 B1**

(12) **EUROPEAN PATENT SPECIFICATION**

(45) Date of publication and mention
of the grant of the patent:
**13.11.2019 Bulletin 2019/46**

(51) Int Cl.:
*H04B 1/713* (2011.01)          *H04W 72/04* (2009.01)
*H04L 1/00* (2006.01)           *H04W 72/02* (2009.01)
*H04W 88/04* (2009.01)

(21) Application number: **14899082.3**

(22) Date of filing: **07.08.2014**

(86) International application number:
**PCT/CN2014/083905**

(87) International publication number:
**WO 2016/019552 (11.02.2016 Gazette 2016/06)**

(54) **DATA TRANSMISSION METHOD, DEVICE AND SYSTEM**

DATENÜBERTRAGUNGSVERFAHREN, VORRICHTUNG UND -SYSTEM

PROCÉDÉ, DISPOSITIF ET SYSTÈME DE TRANSMISSION DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.07.2017 Bulletin 2017/30**

(73) Proprietor: **Huawei Technologies Co. Ltd.
Shenzhen, Guangdong 518129 (CN)**

(72) Inventors:
• **WANG, Jian
Shenzhen
Guangdong 518129 (CN)**
• **LI, Chao
Shenzhen
Guangdong 518129 (CN)**
• **ZHANG, Xingwei
Shenzhen
Guangdong 518129 (CN)**

(74) Representative: **Thun, Clemens
Mitscherlich PartmbB
Patent- und Rechtsanwälte
Sonnenstraße 33
80331 München (DE)**

(56) References cited:
EP-A1- 2 903 334          WO-A1-97/35397
WO-A1-2014/008855         WO-A2-2009/020422
CN-A- 101 778 475         CN-A- 103 516 493
CN-A- 103 517 426         CN-A- 103 546 195
US-A1- 2012 002 616

**Description**

**TECHNICAL FIELD**

Embodiments of the present invention relate to communications technologies, and in particular, to a data transmission method, a device, and a system.

**BACKGROUND**

A channel in a wireless communications system generally has an unstable feature in terms of time and reflects a particular frequency domain selectivity in terms of a frequency domain. In a Long Term Evolution (English full name: Long Term Evolution, English acronym: LTE) system including a physical uplink control channel (English full name: Physical Uplink Control Channel, English acronym: PUCCH), a frequency hopping manner of a fixed-format PUCCH is fixed. For example, a case in which the PUCCH occupies a bandwidth may be: In an even times lot, a bandwidth occupied by the PUCCH is located in a lowest frequency band of a total bandwidth of the wireless communications system. In an odd timeslot, a bandwidth occupied by the PUCCH is located in a highest frequency band of the total bandwidth of the wireless communications system. Therefore, for the fixed-format PUCCH, frequency bands occupied by the PUCCH by means of frequency hopping are always located at two ends of the total bandwidth of the wireless communication system.

However, a frequency diversity gain that can be obtained is relatively small when a data packet is transmitted by using the method in which bandwidths occupied by the PUCCH are always centralized at two ends of the total bandwidth of the wireless communications system.

**SUMMARY**

In a first aspect a data transmission method performed by a first device is provided, the method comprising the steps of:

• determining a frequency hopping parameter and a maximum quantity of retransmission times Nm of to-be-transmitted data, wherein the frequency hopping parameter comprises:

  ◦ an initial frequency hopping location comprising a first start location $n_{VRB,1}$ at which a frequency hopping over first subframes starts, the first subframes having corresponding subframe indices forming a first set, Set 1, and comprising a second start location $n_{VRB,2}$ at which a frequency hopping over second subframes starts, the second subframes having corresponding subframe indices forming a second set, Set 2,
  ◦ wherein in a first alternative:

    the Set 1 includes even subframe indices and Set 2 includes odd subframe indices,
    or
    wherein in a second alternative:
    the Set 1 includes odd subframe indices and Set 2 includes even subframe indices,

  ◦ a bandwidth $N_{D2D\text{-}Tx\_BW}$ of the to-be-transmitted data configured for use during a data transmission in a device to device, D2D communication between the first device and a second device,
  ◦ a frequency hopping offset $N_{offfset,}$
  ◦ a total bandwidth $N_{RB}^{D2D}$ configured for use during the D2D communication between the first device and the second device;

• determining for each subframe of the Set 1 and the Set 2 a first start location for the to-be-transmitted data according to the following formula:

$$n_{PRB}(i) = \begin{cases} \left(n_{VRB,1} + mN_{offset}\right) \bmod \left(N_{RB}^{D2D}\right) & i \in Set1 \\ \left(N_{RB}^{D2D} - 1 - n_{VRB,2} - N_{D2D\text{-}Tx\_BW} - mN_{offset}\right) \bmod \left(N_{RB}^{D2D}\right) & i \in Set2 \end{cases},$$

wherein $n_{PRB}(i)$ indicates a location of the to-be-transmitted data within an i-th subframe, m indicates a current quantity of retransmissions of the to-be transmitted data and is a value from 0 to Nm-1 and Nm is the maximum quantity of retransmission times of the to be transmitted data, thereby determining multiple first start locations

- sending the to-be-transmitted data Nm times on those subframes having subframe indices of the Set 1 and the Set 2 to the second device at the multiple first start locations and with the bandwidth $N_{D2D-Tx\_BW}$ of the to-be-transmitted data, thereby performing the D2D communication with the second device.

In a second aspect a data transmission method performed by a first device is provided, the method comprising the steps of:

- determining a frequency hopping parameter and a maximum quantity of retransmission times Nm, of to-be-transmitted data wherein the frequency hopping parameter comprises:

    ◦ an initial frequency hopping location comprising a first start location $n_{VRB,1}$ at which a frequency hopping over first subframes starts, the first subframes having corresponding subframe indices forming a first set, Set 1, and comprising a second start location $n_{VRB,2}$ at which a frequency hopping over second subframes starts, the second subframes having corresponding subframe indices forming a second set, Set 2,
    ◦ wherein in a first alternative:

        the Set 1 includes even subframe indices and Set 2 includes odd subframe indices,
        or
        wherein in a second alternative:
        the Set 1 includes odd subframe indices and Set 2 includes even subframe indices,

    ◦ a bandwidth $N_{D2D-Tx\_BW}$ of the to-be-transmitted data configured for use during a data transmission in a device to device, D2D communication between the first device and a second device,
    ◦ a frequency hopping offset $N_{offset}$,
    ◦ a total bandwidth $N_{RB}^{D2D}$ configured for use during the D2D communication between the first device and the second device;

- determining for each subframe of the Set 1 and the Set 2 a first start location for the to-be-transmitted data according to the following formula:

$$n_{PRB}(i) = \begin{cases} \left(n_{VRB,1} + \lceil m/2 \rceil N_{offset}\right) \bmod \left(N_{RB}^{D2D}\right) & i \in Set 1 \\ \left(N_{RB}^{D2D} - 1 - n_{VRB,2} - N_{D2D-Tx\_BW} - \lceil m/2 \rceil N_{offset}\right) \bmod \left(N_{RB}^{D2D}\right) & i \in Set 2 \end{cases},$$

wherein $n_{PRB(i)}$ indicates a location of the to-be-transmitted data within an i-th subframe, m indicates a current quantity of retransmissions of the to-be transmitted data and is a value from 0 to Nm-1, and Nm is the maximum quantity of retransmission times of the to be transmitted data, thereby determining multiple first start locations,

- sending the to-be-transmitted data Nm times on those subframes having subframe indices of the Set 1 and the Set 2 to the second device at the multiple first start locations and with the bandwidth $N_{D2D-Tx\_BW}$ of the to-be-transmitted data, thereby performing the D2D communication with the second device.

In a third aspect a data reception method performed by a second device is provided, the method comprising:

- determining a frequency hopping parameter and a maximum quantity of retransmission times Nm of to-be-received data, wherein the frequency hopping parameter comprises:

    ◦ an initial frequency hopping location comprising a first start location $n_{VRB,1}$. at which a frequency hopping over first subframes starts, the first subframes having corresponding sub frame indices forming a first set, Set 1, and comprising a second start location $n_{VRB,2}$ at which a frequency hopping over second subframes starts, the second subframes having corresponding subframe indices forming a second set, Set 2,
    ◦ wherein in a first alternative:

        the Set 1 includes even subframe indices and Set 2 includes odd subframe indices,
        or

wherein in a second alternative:
the Set 1 includes odd subframe indices and Set 2 includes even subframe indices,

∘ a bandwidth $N_{D2D-Tx\_BW}$ of the to-be-received data configured for use during a data transmission in a device to device, D2D communication between a first device and the second device,
∘ a frequency hopping offset $N_{offset}$,
∘ a total bandwidth $N_{RB}^{D2D}$ configured for use during the D2D communication between the first device and the second device;

- determining for each subframe of the Set 1 and the Set 2 a first start location for the to-be-received data according to the following formula:

$$n_{PRB}(i) = \begin{cases} \left(n_{VRB,1} + mN_{offset}\right)\mathrm{mod}\left(N_{RB}^{D2D}\right) & i \in Set1 \\ \left(N_{RB}^{D2D} - 1 - n_{VRB,2} - N_{D2D-Tx\_BW} - mN_{offset}\right)\mathrm{mod}\left(N_{RB}^{D2D}\right) & i \in Set2 \end{cases},$$

wherein $n_{PRB}(i)$ indicates a location of the to-be-received data within an i-th subframe, m indicates a current quantity of retransmissions of to-be transmitted data received at the second device as the to-be-received data and m is a value from 0 to Nm-1 and Nm is the maximum quantity of retransmission times of the to-be-transmitted data at the first device, thereby determining multiple first start locations, receiving from the first device the to-be-received data Nm times on the those subframes having subframe indices of the Set 1 and the Set 2 at the multiple first start locations and received on the bandwidth $N_{D2D-TX\_BW}$, thereby performing the D2D communication with the first device.

In a fourth aspect a data reception method performed by a second device is provided, the method comprising:

- determining a frequency hopping parameter and a maximum quantity of retransmission times Nm of to-be-received data wherein the frequency hopping parameter comprises:

∘ an initial frequency hopping location comprising a first start location $n_{VRB,1}$ at which a frequency hopping over first subframes starts, the first subframes having corresponding sub frame indices forming a first set, Set 1, and comprising a second start location $n_{VRB,2}$ at which a frequency hopping over second subframes starts, the second subframes having corresponding subframe indices forming a second set, Set 2,
∘ wherein in a first alternative:

the Set 1 includes even subframe indices and Set 2 includes odd subframe indices,
or
wherein in a second alternative:
the Set 1 includes odd subframe indices and Set 2 includes even subframe indices,

∘ a bandwidth $N_{D2D-Tx\_Bw}$ of the to-be-received data configured for use during a data transmission in a device to device, D2D communication between a first device and the second device,
∘ a frequency hopping offset $N_{offset}$,
∘ a total bandwidth $N_{RB}^{D2D}$ configured for use during the D2D communication between the first device and the second device;

- determining for each subframe of the Set 1 and the Set 2 a first start location for the to-be-received data according to the following formula:

$$n_{PRB}(i) = \begin{cases} \left(n_{VRB,1} + \lceil m/2 \rceil N_{offset}\right)\mathrm{mod}\left(N_{RB}^{D2D}\right) & i \in Set1 \\ \left(N_{RB}^{D2D} - 1 - n_{VRB,2} - N_{D2D-Tx\_BW} - \lceil m/2 \rceil N_{offset}\right)\mathrm{mod}\left(N_{RB}^{D2D}\right) & i \in Set2 \end{cases},$$

wherein $n_{PRB}(i)$ indicates a location of the to-be-received data within an i-th subframe, m indicates a current quantity of retransmissions at the first device of to-be-transmitted data received at the second device as the to-be-received data and m is a value from 0 to Nm-1 and Nm is the maximum quantity of retransmission times at the first device of the to-be-transmitted data, thereby determining multiple first start locations,

- receiving from the first device the to-be-received data Nm times on the those subframes having subframe indices of the Set 1 and the Set 2 at the multiple first start locations and received on the bandwidth $N_{D2D-Tx\_BW}$, thereby performing the D2D communication with the first device.

Further aspects provide a device configured and intended to perform the method according to the first and second aspect.

Further aspects provide a device configured and intended to perform the method according to the third and fourth aspect.

According to the data transmission method, the device, and the system provided in the embodiments of the present invention, a larger frequency diversity gain can be obtained during data packet transmission.

## BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.

FIG 1 is a schematic diagram of an application scenario of a data transmission method according to the present invention;

FIG. 2 is a flowchart of an embodiment of a data transmission method according to the present invention;

FIG. 3 is a flowchart of another embodiment of a data transmission method according to the present invention;

FIG 4 is a schematic diagram of frequency domain resource mapping;

FIG. 5 is a flowchart of still another embodiment of a data transmission method according to the present invention;

FIG. 6 is a flowchart of yet another embodiment of a data transmission method according to the present invention;

FIG. 7 is a flowchart of yet another embodiment of a data transmission method according to the present invention;

FIG. 8 is a schematic structural diagram of an embodiment of a device according to the present invention;

FIG. 9 is a schematic structural diagram of an embodiment of a device according to the present invention;

FIG. 10 is a schematic structural diagram of an embodiment of a device according to the present invention;

FIG. 11 is a schematic structural diagram of an embodiment of a device according to the present invention;

FIG. 12 is a schematic structural diagram of an embodiment of a wireless system according to the present invention;

FIG. 13 is a schematic structural diagram of an embodiment of a device according to the present invention; and

FIG. 14 is a schematic structural diagram of an embodiment of a device according to the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

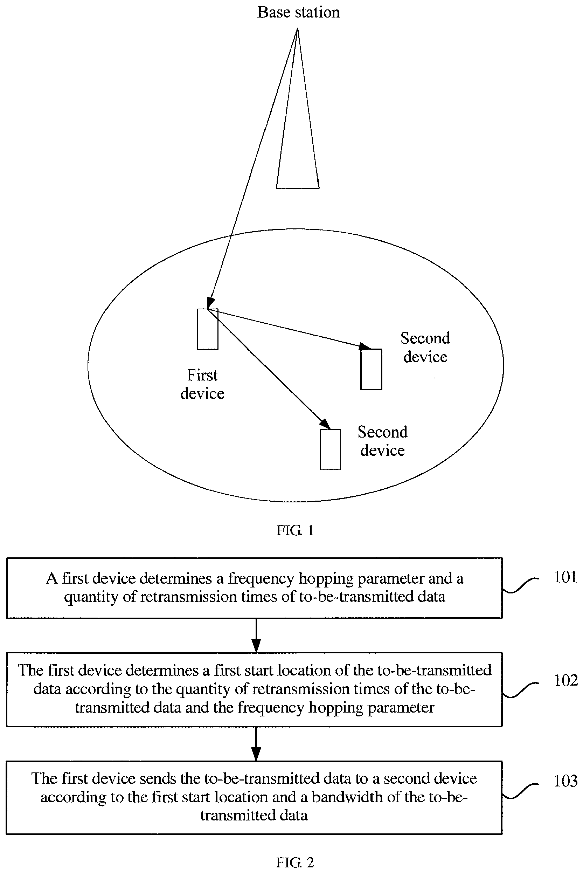

FIG. 1 is a schematic diagram of an application scenario of a data transmission method according to the present invention. As shown in FIG. 1, the application scenario includes a base station, a first device, and a second device. The base station includes but is not limited to a base station in any wireless communications system (for example, a wireless communications system using an LTE technology). The first device and the second device include any device that supports D2D (English full name: Device to Device, English acronym: D2D) communication, and "first" and "second" are only used to distinguish different devices and have no other meanings. Both the first device and the second device can receive a system message and resource allocation signaling that are sent by the base station in a broadcast manner. It should be understood that the first device and the second device include but are not limited to user equipment (English full name: User Equipment, English acronym: UE). It should be understood that "determine" involved in this specification may be understood as "determine", "calculate", "read", "acquire", "obtain", or the like.

FIG. 2 is a flowchart of an embodiment of a data transmission method according to the present invention. As shown in FIG. 2, the method in this embodiment may include the following steps.

Step 101. A first device determines a frequency hopping parameter and a quantity of retransmission times of to-be-transmitted data.

The frequency hopping parameter includes an initial frequency hopping location, a bandwidth of the to-be-transmitted data, a frequency hopping offset, and a total frequency hopping bandwidth. It should be understood that when sending data, the first device needs to retransmit a same data packet for particular times. A retransmission manner may be based on chase combining (English full name: Chase Combining, English acronym: CC) or incremental redundancy (English full name: Incremental Redundancy, English acronym: IR), that is, retransmitted data packets may be exactly same content (CC) that is sent, or may be different redundancy versions (IR) in a large encoded data packet. Data packet retransmission occurs during D2D communication and scheduling assignment (English full name: Scheduling Assignment, English acronym: SA) transmission of control signaling. An objective of retransmission is to extend a coverage area of to-be-transmitted data with limited transmit power by means of retransmission for multiple times. A total quantity of retransmission times of the data packet may be: 1, 2, 4, or 8. The total quantity of retransmission times may be set by means of pre-definition, or may be configured by the base station by using signaling. In either case, there is always to-be-transmitted data that needs to be transmitted for multiple times.

In this embodiment, the first device first determines a frequency hopping parameter and a quantity of retransmission times of to-be-transmitted data that are predefined or configured by using signaling. The frequency hopping parameter includes an initial frequency hopping location, a bandwidth of the to-be-transmitted data, a frequency hopping offset, and a total frequency hopping bandwidth. All these parameters may be predefined or set by the base station by using signaling. A predefined parameter refers to a predefined parameter that is stored in the first device; and a parameter configured by using signaling may be a parameter configured by the base station in FIG. 1 for the first device in FIG. 1 by using signaling.

Step 102. The first device determines a first start location of the to-be-transmitted data according to the quantity of retransmission times of the to-be-transmitted data and the frequency hopping parameter.

In this embodiment, a frequency hopping pattern corresponding to a quantity of retransmission times needs to be designed for multiple times of retransmission of to-be-transmitted data, so as to ensure that a retransmitted data packet can traverse as many first start locations as possible, and obtain a larger frequency diversity gain. The frequency hopping pattern refers to a specific location occupied in a frequency domain during data sending. Different patterns indicate different frequency bands occupied during transmission.

Step 103. The first device sends the to-be-transmitted data to a second device according to the first start location and a bandwidth of the to-be-transmitted data.

The first device determines the first start location of the to-be-transmitted data according to the quantity of retransmission times of the to-be-transmitted data and the frequency hopping parameter, determines a frequency hopping pattern of the to-be-transmitted data according to the first start location and the bandwidth of the to-be-transmitted data, and sends, from the first start location, the to-be-transmitted data to the second device on a frequency band corresponding to the bandwidth of the to-be-transmitted data, so as to obtain a larger frequency diversity gain.

In this embodiment, the first device determines the first start location of the to-be-transmitted data according to the quantity of retransmission times of the to-be-transmitted data and the frequency hopping parameter, and sends the to-be-transmitted data to the second device according to the first start location and the bandwidth of the to-be-transmitted data, so as to ensure that a transmitted data packet can traverse as many frequency domain locations as possible, and obtain a larger frequency diversity gain.

Further, the frequency hopping parameter further includes a maximum quantity of retransmission times of the to-be-transmitted data.

The following describes, in detail by using specific embodiments, the technical solution of the method embodiment shown in FIG. 2.

A concept of a time subset is first proposed. Subframes are classified into a first time subset (Set1) and a second time subset (Set2) according to a preset rule. The two time subsets may be the same or different. The Set1 and the Set2 include any one of the following time subsets: a time set including an even subframe; a time set including an odd subframe; a time set including a subframe corresponding to a subframe index when a sum of the quantity of retransmission times of the to-be-transmitted data and the subframe index is an even number; a time set including a subframe corresponding to a subframe index when a sum of the quantity of retransmission times of the to-be-transmitted data and the subframe index is an odd number; or a time set including all subframes.

For example, i indicates a subframe number, and m indicates a current quantity of retransmission times of the to-be-transmitted data. For example, the Set1 may be a time set including an even subframe, that is, $if\ (i\bmod 2=0), i \in Set1$, and the set2 may be a time set including an odd subframe, that is, $if\ (i\bmod 2)=1, i \in Set2$; the Set1 may be a time set including a subframe corresponding to a subframe index when a sum of the quantity of retransmission times of the to-be-transmitted data and the subframe index is an even number, that is, $if((i+m)\bmod 2)=0, i \in Set1$, and the Set2 may be a time set including a subframe corresponding to a subframe index when a sum of the quantity of retransmission times of the to-be-transmitted data and the subframe index is an odd number, that is, *if ((i+m)mod2)=1,i∈Set2*, or both the Set1 and the Set2 are time sets including all subframes.

Further, the Set1 or the Set2 may be directly indicated according to specific signaling: subframes 0 to 9 are directly indicated by using a binary number of 10 bits such as [0011000110]. Subframes whose bits are 1, that is, the subframes 2, 3, 7, and 8, belong to the Set1 or the Set2, and subframes whose bits are 0 does not belong to the Set1 or the Set2.

Further, the Set1 or the Set2 may be indirectly indicated according to a specific random sequence; a random sequence whose length is N is used for indication, subframes corresponding to 1 (or +1) in the random sequence belong to the Set 1 or the Set2, and subframes corresponding to 0 (or -1) does not belong to the Set1 or the Set2.

Further, the Set 1 or the Set2 may be a time set obtained according to the quantity of retransmission times of the to-be-transmitted data, a subframe index, and the maximum quantity of retransmission times, that is, *if ((m+⌊i/N_m⌋)mod2)=0,i∈Set1* and *if ((m+⌊i/N_m⌋)mod2)=1,i∈Set2*.

**Embodiment 1**

If a current retransmission subframe belongs to the first time subset, the first device determines the first start location of the to-be-transmitted data according to the initial frequency hopping location and the total frequency hopping bandwidth; or

if a current retransmission subframe belongs to the second time subset, the first device determines the first start location of the to-be-transmitted data according to the initial frequency hopping location, the bandwidth of the to-be-transmitted data, and the total frequency hopping bandwidth.

For example, the first start location of the to-be-transmitted data may be determined by using an algorithm in formula (1):

$$n_{PRB}(i) = \begin{cases} \left(n_{VRB,1}\right)\mathrm{mod}\left(N_{RB}^{D2D}\right) & i \in Set1 \\ \left(N_{RB}^{D2D} - 1 - n_{VRB,2} - N_{D2D-Tx\_BW}\right)\mathrm{mod}\left(N_{RB}^{D2D}\right) & i \in Set2 \end{cases} \tag{1},$$

where

$n_{VRB,1}$ and $n_{VRB,2}$ respectively indicate start locations of the to-be-transmitted data in a low frequency band and a high frequency band that are of a frequency domain, and may be determined by using the initial frequency hopping location or directly indicated by the initial frequency hopping location. Typical values of $n_{VRB,1}$ and $n_{VRB,2}$ may be $n_{VRB,1}=n_{VRB,2}=n_{VRB}$, where $n_{VRB}$ is predefined or configured by using signaling;

$N_{RB}^{D2D}$ may indicate two values: One is a value of a total system bandwidth configured for an uplink (frequency division duplex (English full name: Frequency Division Duplex, English acronym: FDD)) or an uplink/downlink (time division duplex (English full name: Time Division Duplex, English acronym: TDD)) system in a cellular network; and the other is a dedicated bandwidth configured for use during data transmission in D2D communication, for example, 30 physical resource blocks (English full name: Physical Resource Block, English acronym: PRB), where the dedicated bandwidth is directly configured by the base station by using signaling, or obtained by means of calculation according to a related parameter configured by the base station, or predefined;

$N_{D2D-TX\_BW}$ indicates the bandwidth of the to-be-transmitted data, for example, two PRBs;

i indicates a subframe number, and the Set1 and the Set2 are the foregoing first time subset and second time subset; and

$n_{PRB}(i)$ indicates a first start location that is of the to-be-transmitted data and determined in the i^th subframe, and when a sum of $n_{PRBb}(i)$ and $N_{D2D-Tx\_BW}$ is greater than $N_{RB}^{D2D}$, remaining to-be-transmitted data is placed starting from a location in which an index value is 0.

It should be noted that formula (1) is an implementation manner of this embodiment. Subframes are classified into two types, the Set1 and the Set2, in formula (1), and there is a corresponding method for calculating a first start location for each time subset. Further, the subframes may not be classified, that is, for any subframe, both a calculation method corresponding to the Set1 in formula (1) and a calculation method corresponding to the Set2 in formula (1) may be used to determine the first start location of the to-be-transmitted data.

## Embodiment 2

If a current retransmission subframe belongs to the first time subset, the first device determines the first start location of the to-be-transmitted data from a relatively low frequency location to a relatively high frequency location according to the initial frequency hopping location, the bandwidth of the to-be-transmitted data, the total frequency hopping bandwidth, and a product of the quantity of retransmission times and the frequency hopping offset; or
if a current retransmission subframe belongs to a second time subset, the first device determines the first start location of the to-be-transmitted data from a relatively high frequency location to a relatively low frequency location according to the initial frequency hopping location, the bandwidth of the to-be-transmitted data, the total frequency hopping bandwidth, and a product of the quantity of retransmission times and the frequency hopping offset.

For example, the first start location of the to-be-transmitted data may be determined by using an algorithm in formula (2):

$$n_{PRB}(i) = \begin{cases} \left(n_{VRB,1} + mN_{offset}\right) \bmod \left(N_{RB}^{D2D}\right) & i \in Set1 \\ \left(N_{RB}^{D2D} - 1 - n_{VRB,2} - N_{D2D-Tx\_BW} - mN_{offset}\right) \bmod \left(N_{RB}^{D2D}\right) & i \in Set2 \end{cases} \tag{2},$$

where

m indicates a current quantity of retransmission times of the to-be-transmitted data, a value of m may be 0 to Nm-1, and Nm is a maximum quantity of retransmission times of the to-be-transmitted data (all maximum quantities of retransmission times in the present invention include first-time transmission); for example, Nm=4 indicates that one piece of to-be-transmitted data may be transmitted for at most 4 times including first-time transmission; and
$N_{offset}$ indicates a frequency hopping offset, which is a fixed value during multiple times of retransmission of one piece of to-be-transmitted data; however, for different pieces of to-be-transmitted data, values of $N_{offset}$ may be mutually different; the value may be configured by using signaling or may be predefined; and a pre-definition manner

may include: $\quad N_{offset} = \left\lceil N_{RB}^{D2D} / N_m \right\rceil$, $\quad N_{offset} = \left\lfloor N_{RB}^{D2D} / N_m \right\rfloor$, $\quad N_{offset} = \left\lceil 2N_{RB}^{D2D} / N_m \right\rceil$, $\quad$ or

$N_{offset} = \left\lfloor 2N_{RB}^{D2D} / N_m \right\rfloor$, where $\lfloor \ \rfloor$ indicates rounding down, and $\lceil \ \rceil$ indicates rounding up.

For other parameters, reference may be made to the description of parameters in Embodiment 1, and details are not described herein.

For another example, the first start location of the to-be-transmitted data may be determined by using an algorithm in formula (3):

$$n_{PRB}(i) = \begin{cases} \left(n_{VRB,1} + \lceil m/2 \rceil N_{offset}\right) \bmod \left(N_{RB}^{D2D}\right) & i \in Set1 \\ \left(N_{RB}^{D2D} - 1 - n_{VRB,2} - N_{D2D-Tx\_BW} - \lceil m/2 \rceil N_{offset}\right) \bmod \left(N_{RB}^{D2D}\right) & i \in Set2 \end{cases} \tag{3}$$

For parameters in formula (3), reference may be made to the description of parameters in Embodiment 1 and formula (2), and details are not described herein.

According to formula (2) and formula (3), in the first time subset, different pieces of to-be-transmitted data are sequentially placed from the configured initial frequency hopping location to a high frequency location in the frequency domain by using frequency hopping offsets corresponding to the different pieces of to-be-transmitted data as steps; and in the second time subset, different pieces of to-be-transmitted data are sequentially placed from the configured initial frequency hopping location to a low-frequency location in the frequency domain by using frequency hopping offsets corresponding to the different pieces of to-be-transmitted data as steps.

It should be noted that, formula (2) and formula (3) are implementation manners of this embodiment. Subframes are classified into two types, the Set1 and the Set2, in formula (2) and formula (3), and the first start location is calculated by using calculation formulas corresponding to the Set1 and the Set2. Further, the subframes may not be classified, that is, for any subframe, either of a calculation method corresponding to the Set1 in formula (2) or formula (3) or a calculation method corresponding to the Set2 in formula (2) or formula (3) can be used to determine the first start location of the to-be-transmitted data, which is not specifically limited herein in the present invention.

For still another example, the first start location of the to-be-transmitted data may be determined by using an algorithm in formula (4):

$$\overline{n}_{PRB} = \left(n_{VRB} + mN_{offset}\right)\mathrm{mod}\left(N_{RB}^{D2D}\right) \quad (4)$$

For parameters in formula (4), reference may be made to the description of parameters in Embodiment 1 and formula (2), and details are not described herein.

In the algorithm of formula (4), an offset value that is multiplied by a quantity of retransmission times is sequentially added to configured start locations used during different times of retransmission, and in formula (4), the first start location is unrelated to a subframe number.

Formula (2) is used as an example, and a list of specific first start locations in Embodiments 2 is provided, where it is assumed that $N_{RB}^{D2D} = 32PRB$ , $n_{VRB,1}=n_{VRB,2}=n_{VRB}=4PRB$, $N_{D2D-Tx\_BW}=6PRB$, $N_m=8$, and $N_{offset}=4$.

Table 1: First start locations (PRB) corresponding to different current quantities of retransmission times.

| Current quantities of retransmission times | 0 | 1 | 2 | 3 | 4 | 5 | 6 | 7 |
|---|---|---|---|---|---|---|---|---|
| First start locations in Set1 | 4 | 8 | 12 | 16 | 20 | 24 | 28 | 0 |
| First start locations in Set2 | 21 | 17 | 13 | 9 | 5 | 1 | 29 | 25 |

As shown in Table 1, in the method in this embodiment, different times of retransmission of the to-be-transmitted data can evenly traverse all sub-bands in all 32 PRBs of the total frequency hopping bandwidth.

**Embodiment 3**

If the maximum quantity of retransmission times is not greater than 2 and a current retransmission subframe belongs to the first time subset, the first device determines the first start location according to the initial frequency hopping location and the total frequency hopping bandwidth; or

if the maximum quantity of retransmission times is not greater than 2 and a current retransmission subframe belongs to the second time subset, the first device determines the first start location according to the initial frequency hopping location, the bandwidth of the to-be-transmitted data, and the total frequency hopping bandwidth; or

if the maximum quantity of retransmission times is greater than 2 and a current retransmission subframe belongs to the first time subset, the first device determines the first start location from a relatively low frequency location to a relatively high frequency location according to the initial frequency hopping location, the bandwidth of the to-be-transmitted data, the total frequency hopping bandwidth, and a product of the quantity of retransmission times and the frequency hopping offset; or

if the maximum quantity of retransmission times is greater than 2 and a current retransmission subframe belongs to the second time subset, the first device determines the first start location from a relatively high frequency location to a relatively low frequency location according to the initial frequency hopping location, the bandwidth of the to-be-transmitted data, the total frequency hopping bandwidth, and a product of the quantity of retransmission times and the frequency hopping offset.

For example, when the maximum quantity $N_m$ of retransmission times is 1 or 2, the first start location of the to-be-transmitted data may be determined by using the algorithm in the foregoing formula (1); or when the maximum quantity $N_m$ of retransmission times is greater than 2, the first start location of the to-be-transmitted data may be determined by using the algorithm in the foregoing formula (2) or formula (3).

Optionally, in this embodiment, when the maximum quantity $N_m$ of retransmission times is greater than 2, the first start location of the to-be-transmitted data may further be determined by using the algorithm in the foregoing formula (4).

**Embodiment 4**

The first device determines the first start location based on an existing formula for calculating a frequency hopping frequency domain location and according to the initial frequency hopping location, the bandwidth of the to-be-transmitted data, the total frequency hopping bandwidth, and a product of the quantity of retransmission times and the frequency hopping offset.

The first start location of the to-be-transmitted data may be determined by using an algorithm in formula (5):

$$\tilde{n}_{PRB}(i) = \left(\tilde{n}_{VRB} + f_{hop}(i) \cdot N_{RB}^{sb} + \left(\left(N_{RB}^{sb} - 1\right) - 2\left(\tilde{n}_{VRB} \bmod N_{RB}^{sb}\right)\right) \cdot f_m(i) + m \cdot N_{offset}\right) \bmod(N_{RB}^{sb} \cdot N_{sb}) \quad (5),$$

where

$\tilde{n}_{PRB}(i)$ indicates a first start location that is of the to-be-transmitted data and determined in the ith subframe;

$\tilde{n}_{VRB}$ indicates a value obtained by mapping the initial frequency hopping location $n_{VRB}$ indicated by using signaling;

$f_{hop}(i)$ indicates a frequency hopping function in the ith subframe;

$f_m(i)$ indicates a mirror function in the ith subframe;

$N_{RB}^{sb}$ indicates a size of a sub-band used during frequency hopping; and

m indicates a current quantity of retransmission times of the to-be-transmitted data, a value of m may be 0 to Nm-1, and Nm is a maximum quantity of retransmission times of the to-be-transmitted data (all maximum quantities of retransmission times in the present invention include first-time transmission); for example, Nm=4 indicates that one piece of to-be-transmitted data may be transmitted for at most 4 times including first-time transmission; and

$N_{offset}$ indicates a frequency hopping offset, which is a fixed value during multiple times of retransmission of one piece of to-be-transmitted data; however, for different pieces of to-be-transmitted data, values of $N_{offset}$ may be mutually different; the value may be configured by using signaling or may be predefined; and a pre-definition manner may include: $N_{offset} = \left\lceil N_{RB}^{D2D} / N_m \right\rceil$, $N_{offset} = \left\lceil N_{RB}^{D2D} / N_m \right\rceil$, $N_{offset} = \left\lceil 2N_{RB}^{D2D} / N_m \right\rceil$, or

$$N_{offset} = \left\lfloor 2N_{RB}^{D2D} / N_m \right\rfloor.$$

Based on the existing formula for calculating a frequency hopping frequency domain location, in formula (5), the first start location of the to-be-transmitted data is generated with reference to the frequency hopping function $f_{hop}(i)$ in the ith subframe, the mirror function $f_m(i)$ in the ith subframe, and the frequency hopping offset $N_{offset}$ multiplied by m, so that one piece of to-be-transmitted data can traverse as many frequency domain locations as possible on a bandwidth during different times of retransmission, and as large a frequency diversity gain as possible is obtained.

**Embodiment 5**

The first device obtains a frequency hopping function according to the quantity of retransmission times, where the frequency hopping function is a calculation factor in an existing formula for calculating a first initial frequency hopping location; and
the first device determines the first start location according to the frequency hopping function, the frequency hopping parameter, and a product of the quantity of retransmission times and the frequency hopping offset.

A specific method for implementing that the first device obtains the frequency hopping function according to the quantity of retransmission times may be: the first device generates a random sequence in the frequency hopping function according to the quantity of retransmission times, so as to obtain the frequency hopping function corresponding to the quantity of retransmission times.

In a formula for generating the frequency hopping function $f_{hop}(i)$, a random seed related to the quantity of retransmission times is used when the random sequence $o(k)$ is being generated. A fixed initial seed $C_{init}$ is used in the prior art, and $C_{init}$ is a cell identifier. In this embodiment, $C_{init}$ is changed, and $C_{init} = g(m, N_{ID})$. For example, $C_{init} = m \times N_{ID}$, or $C_{init} = m + N_{ID}$, where $N_{ID}$ indicates a fixed identifier, which may be a synchronization source identifier, a part of a synchronization source identifier, a physical cell identifier, or the like. The improved frequency hopping function is corresponding to the quantity of retransmission times and is applied in formula (5), so that one piece of to-be-transmitted data can traverse as many first start locations as possible on a bandwidth during different times of retransmission, and as large a frequency diversity gain as possible is obtained.

A specific method for implementing that the first device obtains the frequency hopping function according to the quantity of retransmission times may further be: the first device generates, according to the quantity of retransmission times, a location in which a random sequence in the frequency hopping function is read, so as to obtain the frequency hopping function corresponding to the quantity of retransmission times.

In the formula for generating the frequency hopping function $f_{hop}(i)$, the random sequence is generated by using a same random seed, but locations in which the random sequence is read are different for different quantities of retransmission times, that is, i in the frequency hopping function $f_{hop}(i)$ is replaced and modified by a function related to m, for example, $i=(i+a)\times(m+1)$, $i=i\times(m+1)$, or $i=i\times(a\times m+1)$, where a is a constant, or a start-stop value of a value of a is generated according to m. The improved frequency hopping function is corresponding to the quantity of retransmission times and is applied in formula (5), so that one piece of to-be-transmitted data can traverse as many frequency domain locations as possible on a bandwidth during different times of retransmission, and as large a frequency diversity gain as possible is obtained.

According to the two improvements of the frequency hopping function $f_{hop}(i)$, different random sequence values may be generated for different quantities of retransmission times, so that when the frequency hopping function $f_{hop}(i)$ is generated, different random locations can be generated for different quantities of retransmission times.

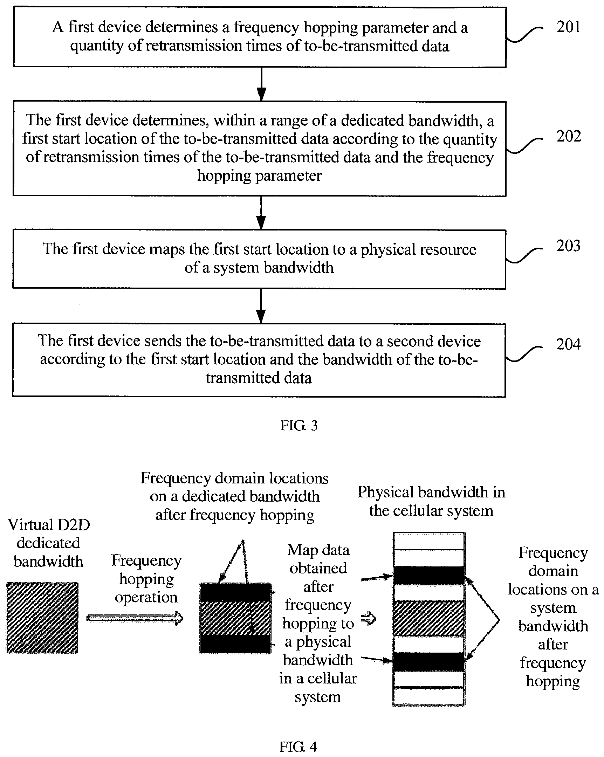

FIG. 3 is a flowchart of another embodiment of a data transmission method according to the present invention. As shown in FIG. 3, the method in this embodiment may include the following steps.

Step 201. A first device determines a frequency hopping parameter and a quantity of retransmission times of to-be-transmitted data.

Step 201 in this embodiment is similar to step 101 in the foregoing method embodiment, and details are not described herein.

Step 202. The first device determines, within a range of a dedicated bandwidth, a first start location of the to-be-transmitted data according to the quantity of retransmission times of the to-be-transmitted data and the frequency hopping parameter.

The dedicated bandwidth is a bandwidth used during data transmission from the first device to a second device. When allocating a resource, a base station sends, in a system information block (English full name: System Information Block, English acronym: SIB) message or a cell-specific radio resource control (English full name: Radio Resource Control, English acronym: RRC) message, a bandwidth specially allocated for use in D2D communication, to all devices connected to the base station. Then, in downlink control information (English full name: Downlink Control Information, English acronym: DCI) of the base station, resource allocation information of the device may be indicated by using a total bandwidth of a cellular system, or resource allocation information of the device may be indicated by using a dedicated bandwidth. That is, a resource allocation process is: a part of the bandwidth is spared as a D2D dedicated bandwidth, and frequency hopping can be performed only in this bandwidth, and a formula for calculating the first start location is executed based on a logical serial number on the D2D dedicated bandwidth. The base station notifies, in the SIB message or the cell-specific RRC message, the first device and/or the second device of a size of the dedicated bandwidth in advance.

Step 203. The first device maps the first start location to a physical resource of a system bandwidth.

The first device maps the first start location to a physical resource of the system bandwidth. A mapping method may be one-by-one mapping according to a sequence of locations of the dedicated bandwidth on the system bandwidth.

Step 204. The first device sends the to-be-transmitted data to a second device according to the first start location and the bandwidth of the to-be-transmitted data.

In this embodiment, the first start location of the to-be-transmitted data is obtained on the dedicated bandwidth, so that signaling overheads of DCI and SA can be reduced, a bandwidth fragmentation problem can be mitigated, and a frequency diversity gain can be improved as much as possible.

Further, after step 201, the foregoing method further includes: sending, by the first device within the range of the dedicated bandwidth, signaling used to indicate the initial frequency hopping location to the second device.

FIG. 4 is a schematic diagram of frequency domain resource mapping. As shown in the leftmost diagram of FIG. 4, the first device combines all obtained D2D dedicated bandwidths into a continuous virtual D2D dedicated bandwidth. Then the first device performs a frequency hopping operation on the continuous virtual D2D dedicated bandwidth, and obtains, by means of calculation, frequency domain locations on the virtual D2D dedicated bandwidth after frequency hopping, as shown in black parts of the second diagram in FIG. 4. Then the virtual D2D dedicated bandwidth is one-one mapped to a physical resource, in a cellular system, that is corresponding to a D2D dedicated bandwidth and preserved for D2D. Correspondingly, as shown in the rightmost diagram of FIG. 4, data obtained after D2D frequency hopping is also carried in a frequency domain location of a corresponding physical bandwidth. This embodiment is implemented on the premise that when allocating a resource, a base station sends, in an SIB message or a cell-specific RRC message, a bandwidth specially allocated for use in D2D communication, to all devices (including the first device and the second device) connected to the base station. Therefore, the first device knows how to perform mapping from the D2D dedicated bandwidth to a corresponding frequency domain resource of a physical bandwidth in a cellular system; and after receiving a resource allocation message that is sent by the first device and indicated by using SA signaling on the D2D dedicated bandwidth, the second device can obtain a resource corresponding to the D2D dedicated bandwidth from a corresponding physical bandwidth in the cellular system, and obtain frequency domain location information of to-be-received D2D data.

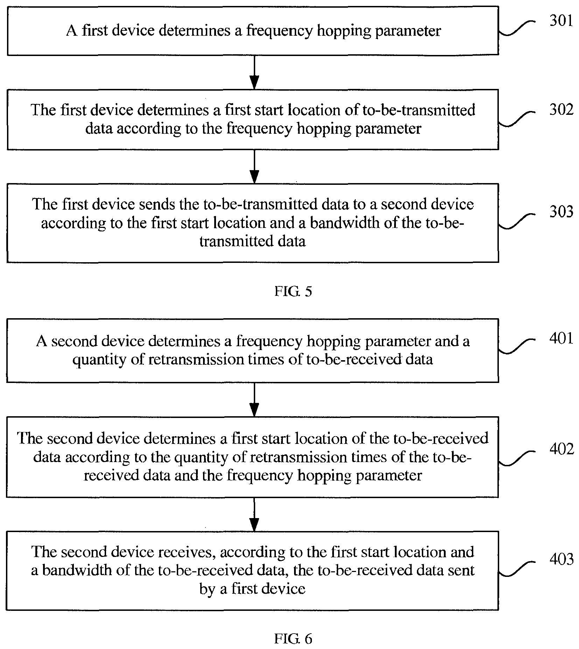

FIG. 5 is a flowchart of still another embodiment of a data transmission method according to the present invention. As shown in FIG. 5, the method in this embodiment may include the following steps.

Step 301. A first device determines a frequency hopping parameter.

The frequency hopping parameter includes an initial frequency hopping location, a bandwidth of to-be-transmitted data, and a total frequency hopping bandwidth. A difference between step 301 and step 101 of the foregoing method embodiment lies in that the first device does not need to determine a quantity of retransmission times of the to-be-transmitted data.

Step 302. The first device determines a first start location of the to-be-transmitted data according to the frequency hopping parameter.

As shown in the foregoing formula (1), a difference between step 302 and step 102 of the foregoing method embodiment lies in that the first start location of the to-be-transmitted data may be determined according to only the frequency hopping parameter.

Step 303. The first device sends the to-be-transmitted data to a second device according to the first start location and a bandwidth of the to-be-transmitted data.

Step 303 is similar to step 103 in the foregoing method embodiment, and details are not described herein.

In this embodiment, the first device determines the first start location of the to-be-transmitted data according to the frequency hopping parameter, and sends the to-be-transmitted data to the second device according to the first start location and the bandwidth of the to-be-transmitted data, so as to ensure that a transmitted data packet can traverse as many frequency domain locations as possible, and obtain a larger frequency diversity gain.

Further, a specific method for implementing step 302 may be: if a current retransmission subframe belongs to a first time subset, the first device determines the first start location of the to-be-transmitted data according to the initial frequency hopping location and the total frequency hopping bandwidth; or if a current retransmission subframe belongs to a second time subset, the first device determines the first start location of the to-be-transmitted data according to the initial frequency hopping location, the bandwidth of the to-be-transmitted data, and the total frequency hopping bandwidth.

Further, a specific method for implementing step 302 may be: the first device determines whether the maximum quantity of retransmission times is not greater than 2; and if the maximum quantity of retransmission times is not greater than 2 and a current retransmission subframe belongs to a first time subset, the first device determines the first start location according to the initial frequency hopping location and the total frequency hopping bandwidth; or if the maximum quantity of retransmission times is not greater than 2 and a current retransmission subframe belongs to a second time subset, the first device determines the first start location according to the initial frequency hopping location, the bandwidth of the to-be-transmitted data, and the total frequency hopping bandwidth.

FIG 6 is a flowchart of yet another embodiment of a data transmission method according to the present invention. As shown in FIG. 6, the method in this embodiment may include the following steps.

Step 401. A second device determines a frequency hopping parameter and a quantity of retransmission times of to-be-received data.

The frequency hopping parameter includes an initial frequency hopping location, a bandwidth of the to-be-received data, a frequency hopping offset, and a total frequency hopping bandwidth. This embodiment is executed by the second device, and is corresponding to the method embodiment shown in FIG. 2. The frequency hopping parameter obtained by the second device may be predefined, or may be sent by the first device by using signaling.

Step 402. The second device determines a first start location of the to-be-received data according to the quantity of retransmission times of the to-be-received data and the frequency hopping parameter.

The second device needs to know the first start location of the to-be-received data to receive the data, and because frequency hopping parameters on two sides, the first device and the second device, are the same, the method used by the second device to determine the first start location is the same as that used by the first device.

Step 403. The second device receives, according to the first start location and a bandwidth of the to-be-received data, the to-be-received data sent by a first device.

In this embodiment, the second device obtains the first start location of the to-be-received data according to the quantity of retransmission times of the to-be-received data and the frequency hopping parameter, and receives the to-be-received data according to the first start location and the bandwidth of the to-be-received data, so as to ensure that a transmitted data packet can traverse as many frequency domain locations as possible, and obtain a larger frequency diversity gain.

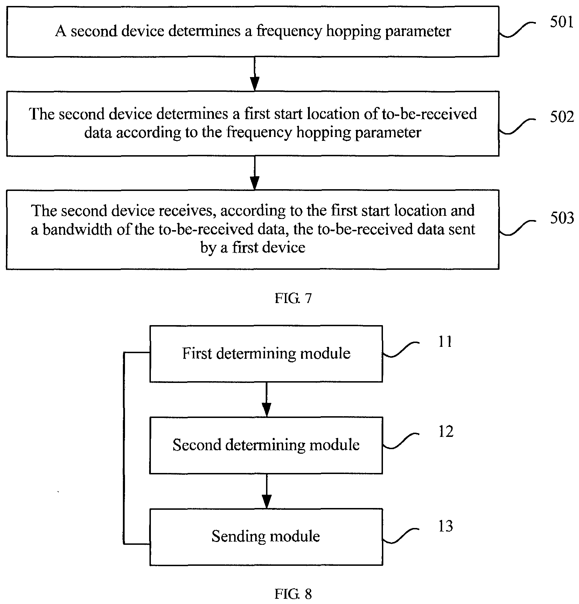

FIG. 7 is a flowchart of yet another embodiment of a data transmission method according to the present invention. As shown in FIG 7, the method in this embodiment may include the following steps.

Step 501. The second device determines a frequency hopping parameter.

The frequency hopping parameter includes an initial frequency hopping location, a bandwidth of to-be-received data, and a total frequency hopping bandwidth. A difference between step 501 and step 401 of the foregoing method embodiment lies in that the second device does not need to determine a quantity of retransmission times of the to-be-received data.

Step 502. The second device determines a first start location of the to-be-received data according to the frequency hopping parameter.

As shown in the foregoing formula (1), a difference between step 502 and step 402 of the foregoing method embodiment lies in that the first start location of the to-be-received data may be determined according to only the frequency hopping parameter.

Step 503. The second device receives, according to the first start location and a bandwidth of the to-be-received data, the to-be-received data sent by a first device.

Step 503 is similar to step 403 in the foregoing method embodiment, and details are not described herein.

In this embodiment, the second device obtains the first start location of the to-be-received data according to the frequency hopping parameter, and receives the to-be-received data according to the first start location and the bandwidth of the to-be-received data, so as to ensure that a transmitted data packet can traverse as many frequency domain locations as possible, and obtain a larger frequency diversity gain.

Further, a specific method for implementing step 502 may be: if a current retransmission subframe belongs to a first time subset, the second device determines the first start location of the to-be-received data according to the initial frequency hopping location and the total frequency hopping bandwidth; or if a current retransmission subframe belongs to a second time subset, the second device determines the first start location of the to-be-received data according to the initial frequency hopping location, the bandwidth of the to-be-received data, and the total frequency hopping bandwidth.

Further, a specific method for implementing step 502 may be: the second device determines whether the maximum quantity of retransmission times is not greater than 2; and if the maximum quantity of retransmission times is not greater than 2 and a current retransmission subframe belongs to a first time subset, the second device determines the first start location according to the initial frequency hopping location and the total frequency hopping bandwidth; or if the maximum quantity of retransmission times is not greater than 2 and a current retransmission subframe belongs to a second time subset, the second device determines the first start location according to the initial frequency hopping location, the bandwidth of the to-be-received data, and the total frequency hopping bandwidth.

In this embodiment, a method used by the second device to determine the first start location of the to-be-received data may also be any method described in the foregoing Embodiment 1 to Embodiment 5, and details are not described herein.

FIG. 8 is a schematic structural diagram of an embodiment of a device according to the present invention. As shown in FIG. 8, the device in this embodiment may include: a first determining module 11, a second determining module 12, and a sending module 13. The first determining module 11 is configured to determine a frequency hopping parameter and a quantity of retransmission times of to-be-transmitted data, where the frequency hopping parameter includes an initial frequency hopping location, a bandwidth of the to-be-transmitted data, a frequency hopping offset, and a total frequency hopping bandwidth. The second determining module 12 is configured to determine a first start location of the to-be-transmitted data according to the quantity of retransmission times of the to-be-transmitted data and the frequency hopping parameter. The sending module 13 is configured to send the to-be-transmitted data to a second device according to the first start location and the bandwidth of the to-be-transmitted data.

The device in this embodiment is equivalent to the foregoing first device, and may be configured to execute the technical solutions of the method embodiment shown in FIG. 2 or FIG. 3, and an implementation principle and a technical effect of the device are similar and are not described herein again.

In addition, a computer readable medium is further provided, including a computer readable instruction that performs the following operation when the instruction is executed: executing the operations from 101 to 103 in the method of the foregoing embodiment. Optionally, the computer readable instruction may further execute the operations from 201 to 204 in the method of the foregoing embodiment.

In addition, a computer program product is further provided, including the foregoing computer readable medium.

Further, the frequency hopping parameter further includes a maximum quantity of retransmission times of the to-be-transmitted data.

Further, the second determining module 12 is specifically configured to: if a current retransmission subframe belongs to a first time subset, determine the first start location of the to-be-transmitted data from a relatively low frequency location to a relatively high frequency location according to the initial frequency hopping location, the bandwidth of the to-be-transmitted data, the total frequency hopping bandwidth, and a product of the quantity of retransmission times and the frequency hopping offset; or if a current retransmission subframe belongs to a second time subset, determine the first start location of the to-be-transmitted data from a relatively high frequency location to a relatively low frequency location according to the initial frequency hopping location, the bandwidth of the to-be-transmitted data, the total frequency hopping bandwidth, and a product of the quantity of retransmission times and the frequency hopping offset.

Further, the first time subset and the second time subset are the same or different.

Further, the first time subset and the second time subset include any one of the following time subsets:

a time set including an even subframe;
a time set including an odd subframe;
a time set including a subframe corresponding to a subframe index when a sum of the quantity of retransmission times of the to-be-transmitted data and the subframe index is an even number;
a time set including a subframe corresponding to a subframe index when a sum of the quantity of retransmission times of the to-be-transmitted data and the subframe index is an odd number; or
a time set including all subframes.

Further, the second determining module 12 is specifically configured to determine the first start location based on an existing formula for calculating a frequency hopping frequency domain location and according to the initial frequency hopping location, the bandwidth of the to-be-transmitted data, the total frequency hopping bandwidth, and a product of the quantity of retransmission times and the frequency hopping offset.

Further, the second determining module 12 is specifically configured to: obtain a frequency hopping function according to the quantity of retransmission times, where the frequency hopping function is a calculation factor in an existing formula for calculating a frequency hopping frequency domain location; and determine the first start location according to the frequency hopping function, the frequency hopping parameter, and a product of the quantity of retransmission times and the frequency hopping offset.

Further, the second determining module 12 is further configured to: generate a random sequence in the frequency hopping function according to the quantity of retransmission times, so as to obtain the frequency hopping function corresponding to the quantity of retransmission times; or generate, according to the quantity of retransmission times, a location in which a random sequence in the frequency hopping function is read, so as to obtain the frequency hopping function corresponding to the quantity of retransmission times.

Further, the total frequency hopping bandwidth is a dedicated bandwidth used during data transmission, and the second determining module 12 is specifically configured to determine, within a range of the dedicated bandwidth, the first start location of the to-be-transmitted data according to the quantity of retransmission times of the to-be-transmitted data and the frequency hopping parameter, and map the first start location to a physical resource of a system bandwidth.

Further, the sending module 13 is further configured to send, within the range of the dedicated bandwidth, signaling used to indicate the initial frequency hopping location to the second device.

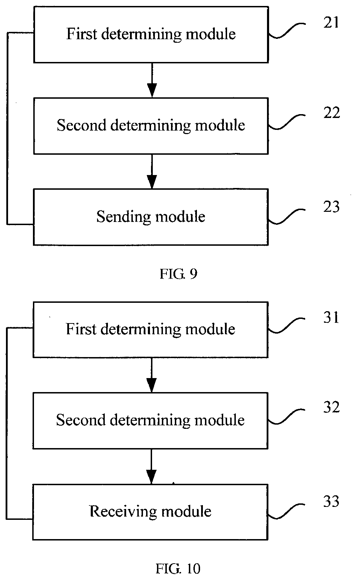

FIG 9 is a schematic structural diagram of an embodiment of a device according to the present invention. As shown in FIG. 9, the device in this embodiment may include: a first determining module 21, a second determining module 22, and a sending module 23. The first determining module 21 is configured to determine a frequency hopping parameter, where the frequency hopping parameter includes an initial frequency hopping location, a bandwidth of to-be-transmitted data, and a total frequency hopping bandwidth. The second determining module 22 is configured to determine a first start location of the to-be-transmitted data according to the frequency hopping parameter. The sending module 23 is configured to send the to-be-transmitted data to a second device according to the first start location and the bandwidth of the to-be-transmitted data.

The device in this embodiment is equivalent to the foregoing first device, and may be configured to execute the technical solutions of the method embodiment shown in FIG. 5, and an implementation principle and a technical effect of the device are similar and are not described herein again.

In addition, a computer readable medium is further provided, including a computer readable instruction that performs the following operation when the instruction is executed: executing the operations from 301 to 303 in the method of the foregoing embodiment.

In addition, a computer program product is further provided, including the foregoing computer readable medium.

Further, the second determining module 22 is specifically configured to: if a current retransmission subframe belongs to a first time subset, determine the first start location of the to-be-transmitted data according to the initial frequency hopping location and the total frequency hopping bandwidth; or if a current retransmission subframe belongs to a second time subset, determine the first start location of the to-be-transmitted data according to the initial frequency hopping location, the bandwidth of the to-be-received data, and the total frequency hopping bandwidth.

Further, the second determining module 22 is specifically configured to: determine whether the maximum quantity of retransmission times is not greater than 2; and if the maximum quantity of retransmission times is not greater than 2 and a current retransmission subframe belongs to a first time subset, determine the first start location according to the initial frequency hopping location and the total frequency hopping bandwidth, or if the maximum quantity of retransmission times is not greater than 2 and a current retransmission subframe belongs to a second time subset, determine the first start location according to the initial frequency hopping location, the bandwidth of the to-be-transmitted data, and the total frequency hopping bandwidth.

Further, the total frequency hopping bandwidth is a dedicated bandwidth used during data transmission, and the second determining module 22 is specifically configured to determine, within a range of the dedicated bandwidth, the first start location of the to-be-transmitted data according to the frequency hopping parameter, and map the first start location to a physical resource of a system bandwidth.

Further, the sending module 23 is further configured to send, within the range of the dedicated bandwidth, signaling used to indicate the initial frequency hopping location to the second device.

FIG 10 is a schematic structural diagram of an embodiment of a device according to the present invention. As shown in FIG. 10, the device in this embodiment may include: a first determining module 31, a second determining module 32, and a receiving module 33. The first determining module 31 is configured to determine a frequency hopping parameter and a quantity of retransmission times of to-be-received data, where the frequency hopping parameter includes an initial frequency hopping location, a bandwidth of the to-be-received data, a frequency hopping offset, and a total frequency hopping bandwidth. The second determining module 32 is configured to determine a first start location of the to-be-received data according to the quantity of retransmission times of the to-be-received data and the frequency hopping parameter. The receiving module 33 is configured to receive, according to the first start location and the bandwidth of the to-be-received data, the to-be-received data sent by a first device.

The device in this embodiment is equivalent to the foregoing second device, and may be configured to execute the technical solutions of the method embodiment shown in FIG. 6, and an implementation principle and a technical effect of the device are similar and are not described herein again.

In addition, a computer readable medium is further provided, including a computer readable instruction that performs the following operation when the instruction is executed: executing the operations from 401 to 403 in the method of the foregoing embodiment.

In addition, a computer program product is further provided, including the foregoing computer readable medium.

Further, the frequency hopping parameter further includes a maximum quantity of retransmission times of the to-be-received data and a frequency hopping offset.

Further, the second determining module 32 is specifically configured to: if a current retransmission subframe belongs to a first time subset, determine the first start location of the to-be-received data from a relatively low frequency location to a relatively high frequency location according to the initial frequency hopping location, the bandwidth of the to-be-received data, the total frequency hopping bandwidth, and a product of the quantity of retransmission times and the frequency hopping offset; or if a current retransmission subframe belongs to a second time subset, determine the first start location of the to-be-received data from a relatively high frequency location to a relatively low frequency location according to the initial frequency hopping location, the bandwidth of the to-be-received data, the total frequency hopping bandwidth, and a product of the quantity of retransmission times and the frequency hopping offset.

Further, the first time subset and the second time subset are the same or different.

Further, the first time subset and the second time subset include any one of the following time subsets:

a time set including an even subframe;
a time set including an odd subframe;
a time set including a subframe corresponding to a subframe index when a sum of the quantity of retransmission times of the to-be-received data and the subframe index is an even number;
a time set including a subframe corresponding to a subframe index when a sum of the quantity of retransmission times of the to-be-received data and the subframe index is an odd number; or
a time set including all subframes.

Further, the second determining module 32 is specifically configured to determine the first start location based on an existing formula for calculating a frequency hopping frequency domain location and according to the initial frequency hopping location, the bandwidth of the to-be-received data, the total frequency hopping bandwidth, and a product of the quantity of retransmission times and the frequency hopping offset.

Further, the second determining module 32 is specifically configured to: obtain a frequency hopping function according to the quantity of retransmission times, where the frequency hopping function is a calculation factor in an existing formula for calculating a frequency hopping frequency domain location; and determine the first start location according to the frequency hopping function, the frequency hopping parameter, and a product of the quantity of retransmission times and the frequency hopping offset.

Further, the second determining module 32 is further configured to: generate a random sequence in the frequency hopping function according to the quantity of retransmission times, so as to obtain the frequency hopping function corresponding to the quantity of retransmission times; or generate, according to the quantity of retransmission times, a location in which a random sequence in the frequency hopping function is read, so as to obtain the frequency hopping function corresponding to the quantity of retransmission times.

Further, the total frequency hopping bandwidth is a dedicated bandwidth used during data transmission, and the second determining module 32 is specifically configured to determine, within a range of the dedicated bandwidth, the first start location of the to-be-received data according to the quantity of retransmission times of the to-be-received data and the frequency hopping parameter, and map the first start location to a physical resource of a system bandwidth.

Further, the receiving module 33 is further configured to receive, within the range of the dedicated bandwidth, signaling used to indicate the initial frequency hopping location.

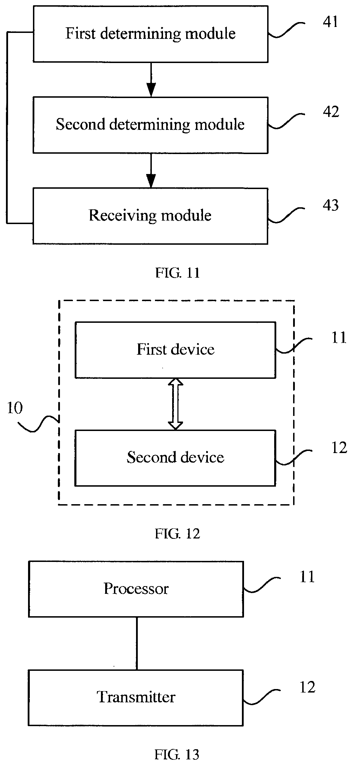

FIG 11 is a schematic structural diagram of an embodiment of a device according to the present invention. As shown in FIG. 11, the device in this embodiment may include: a first determining module 41, a second determining module 42, and a receiving module 43. The first determining module 41 is configured to determine a frequency hopping parameter, where the frequency hopping parameter includes an initial frequency hopping location, a bandwidth of to-be-received data, and a total frequency hopping bandwidth. The second determining module 42 is configured to determine a first start location of the to-be-received data according to the frequency hopping parameter. The receiving module 43 is configured to receive, according to the first start location and the bandwidth of the to-be-received data, the to-be-received data sent by a first device.

The device in this embodiment is equivalent to the foregoing second device, and may be configured to execute the technical solutions of the method embodiment shown in FIG 7, and an implementation principle and a technical effect of the device are similar and are not described herein again.

In addition, a computer readable medium is further provided, including a computer readable instruction that performs the following operation when the instruction is executed: executing the operations from 501 to 503 in the method of the foregoing embodiment.

In addition, a computer program product is further provided, including the foregoing computer readable medium.

Further, the second determining module 42 is specifically configured to: if a current retransmission subframe belongs to a first time subset, determine the first start location of the to-be-received data according to the initial frequency hopping location and the total frequency hopping bandwidth; or if a current retransmission subframe belongs to a second time subset, determine the first start location of the to-be-received data according to the initial frequency hopping location, the bandwidth of the to-be-received data, and the total frequency hopping bandwidth.

Further, the frequency hopping parameter further includes a maximum quantity of retransmission times of the to-be-received data, and the second determining module 42 is specifically configured to: determine whether the maximum quantity of retransmission times is not greater than 2; and if the maximum quantity of retransmission times is not greater than 2 and a current retransmission subframe belongs to a first time subset, determine the first start location according to the initial frequency hopping location and the total frequency hopping bandwidth, or if the maximum quantity of retransmission times is not greater than 2 and a current retransmission subframe belongs to a second time subset, determine the first start location according to the initial frequency hopping location, the bandwidth of the to-be-received data, and the total frequency hopping bandwidth.

Further, the total frequency hopping bandwidth is a dedicated bandwidth used during data transmission, and the second determining module 42 is specifically configured to determine, within a range of the dedicated bandwidth, the first start location of the to-be-received data according to the frequency hopping parameter, and map the first start location to a physical resource of a system bandwidth.

Further, the receiving module 43 is further configured to receive, within the range of the dedicated bandwidth, signaling used to indicate the initial frequency hopping location.

FIG 12 is a schematic structural diagram of an embodiment of a wireless system according to the present invention. As shown in FIG. 12, a system 10 in this embodiment includes a first device 11 and a second device 12. The first device 11 may use a structure in the device embodiment shown in FIG. 8, correspondingly, the first device 11 can execute the technical solutions in the method embodiments shown in FIG. 2 and FIG. 3, and an implementation principle and a technical effect of the first device 11 are similar and are not described herein again. The second device 12 may use a structure in the device embodiment shown in FIG 10, correspondingly, the second device 12 can execute the technical solutions in the method embodiment shown in FIG. 6, and an implementation principle and a technical effect of the second device 12 are similar and are not described herein again. Alternatively, the first device 11 may use a structure in the device embodiment shown in FIG. 9, correspondingly, the first device 11 can execute the technical solutions in the method embodiment shown in FIG 5, and an implementation principle and a technical effect of the first device 11 are similar and are not described herein again; and the second device 12 may use a structure in the device embodiment shown in FIG 11, correspondingly, the second device 12 can execute the technical solutions in the method embodiment shown in FIG. 7, and an implementation principle and a technical effect of the second device 12 are similar.

FIG. 13 is a schematic structural diagram of an embodiment of a device according to the present invention. As shown in FIG 13, the device in this embodiment may include a processor 11 and a transmitter 12. The processor 11 is configured to determine a frequency hopping parameter and a quantity of retransmission times of to-be-transmitted data, where the frequency hopping parameter includes an initial frequency hopping location, a bandwidth of the to-be-transmitted data, a frequency hopping offset, and a total frequency hopping bandwidth, and determine a first start location of the to-be-transmitted data according to the quantity of retransmission times of the to-be-transmitted data and the frequency hopping parameter. The transmitter 12 is configured to send the to-be-transmitted data to a second device according to the first start location and the bandwidth of the to-be-transmitted data.

Further, the frequency hopping parameter further includes a maximum quantity of retransmission times of the to-be-transmitted data.

Further, the processor 11 is specifically configured to: if a current retransmission subframe belongs to a first time subset, determine the first start location of the to-be-transmitted data from a relatively low frequency location to a relatively high frequency location according to the initial frequency hopping location, the bandwidth of the to-be-transmitted data, the total frequency hopping bandwidth, and a product of the quantity of retransmission times and the frequency hopping offset; or if a current retransmission subframe belongs to a second time subset, determine the first start location of the to-be-transmitted data from a relatively high frequency location to a relatively low frequency location according to the initial frequency hopping location, the bandwidth of the to-be-transmitted data, the total frequency hopping bandwidth, and a product of the quantity of retransmission times and the frequency hopping offset.

Further, the first time subset and the second time subset are the same or different.

Further, the first time subset and the second time subset include any one of the following time subsets: a time set including an even subframe; a time set including an odd subframe; a time set including a subframe corresponding to a subframe index when a sum of the quantity of retransmission times of the to-be-transmitted data and the subframe index is an even number; a time set including a subframe corresponding to a subframe index when a sum of the quantity of retransmission times of the to-be-transmitted data and the subframe index is an odd number; or a time set including all subframes.

Further, the processor 11 is specifically configured to determine the first start location based on an existing formula for calculating a frequency hopping frequency domain location and according to the initial frequency hopping location, the bandwidth of the to-be-transmitted data, the total frequency hopping bandwidth, and a product of the quantity of retransmission times and the frequency hopping offset.

Further, the processor 11 is specifically configured to: obtain a frequency hopping function according to the quantity of retransmission times, where the frequency hopping function is a calculation factor in an existing formula for calculating a frequency hopping frequency domain location; and determine the first start location according to the frequency hopping function, the frequency hopping parameter, and a product of the quantity of retransmission times and the frequency hopping offset.

Further, the processor 11 is further configured to: generate a random sequence in the frequency hopping function according to the quantity of retransmission times, so as to obtain the frequency hopping function corresponding to the quantity of retransmission times; or generate, according to the quantity of retransmission times, a location in which a random sequence in the frequency hopping function is read, so as to obtain the frequency hopping function corresponding to the quantity of retransmission times.

Further, the total frequency hopping bandwidth is a dedicated bandwidth used during data transmission, and the processor 11 is specifically configured to determine, within a range of the dedicated bandwidth, the first start location of the to-be-transmitted data according to the quantity of retransmission times of the to-be-transmitted data and the frequency hopping parameter, and map the first start location to a physical resource of a system bandwidth.

Further, the transmitter 12 is further configured to send, within the range of the dedicated bandwidth, signaling used to indicate the initial frequency hopping location to the second device.

The device shown in FIG. 13 may further be applicable to another method embodiment, that is, the processor 11 is configured to determine a frequency hopping parameter, where the frequency hopping parameter includes an initial frequency hopping location, a bandwidth of to-be-transmitted data, and a total frequency hopping bandwidth, and determine a first start location of the to-be-transmitted data according to the frequency hopping parameter; and the transmitter 12 is configured to send the to-be-transmitted data to a second device according to the first start location and the bandwidth of the to-be-transmitted data.

Further, the processor 11 is specifically configured to: if a current retransmission subframe belongs to a first time subset, determine the first start location of the to-be-transmitted data according to the initial frequency hopping location and the total frequency hopping bandwidth; or if a current retransmission subframe belongs to a second time subset, determine the first start location of the to-be-transmitted data according to the initial frequency hopping location, the bandwidth of the to-be-received data, and the total frequency hopping bandwidth.

Further, the processor 11 is specifically configured to: determine whether the maximum quantity of retransmission times is not greater than 2; and if the maximum quantity of retransmission times is not greater than 2 and a current retransmission subframe belongs to a first time subset, determine the first start location according to the initial frequency hopping location and the total frequency hopping bandwidth, or if the maximum quantity of retransmission times is not greater than 2 and a current retransmission subframe belongs to a second time subset, determine the first start location according to the initial frequency hopping location, the bandwidth of the to-be-transmitted data, and the total frequency hopping bandwidth.

Further, the total frequency hopping bandwidth is a dedicated bandwidth used during data transmission, and the processor 11 is specifically configured to determine, within a range of the dedicated bandwidth, the first start location of the to-be-transmitted data according to the frequency hopping parameter, and map the first start location to a physical resource of a system bandwidth.

Further, the transmitter 12 is further configured to send, within the range of the dedicated bandwidth, signaling used to indicate the initial frequency hopping location to the second device.

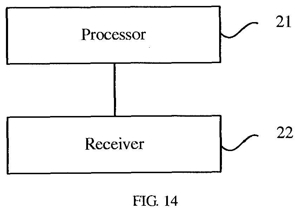

FIG 14 is a schematic structural diagram of an embodiment of a device according to the present invention. As shown in FIG 14, the device in this embodiment may include a processor 21 and a receiver 22. The processor 21 is configured to: determine a frequency hopping parameter and a quantity of retransmission times of to-be-received data, where the frequency hopping parameter includes an initial frequency hopping location, a bandwidth of the to-be-received data, a frequency hopping offset, and a total frequency hopping bandwidth; and determine a first start location of the to-be-received data according to the quantity of retransmission times of the to-be-received data and the frequency hopping parameter. The receiver 22 is configured to receive, according to the first start location and the bandwidth of the to-be-received data, the to-be-received data sent by a first device.

Further, the frequency hopping parameter further includes a maximum quantity of retransmission times of the to-be-received data and a frequency hopping offset.

Further, the processor 21 is specifically configured to: if a current retransmission subframe belongs to a first time subset, determine the first start location of the to-be-received data from a relatively low frequency location to a relatively high frequency location according to the initial frequency hopping location, the bandwidth of the to-be-received data, the total frequency hopping bandwidth, and a product of the quantity of retransmission times and the frequency hopping offset; or if a current retransmission subframe belongs to a second time subset, determine the first start location of the to-be-received data from a relatively high frequency location to a relatively low frequency location according to the initial frequency hopping location, the bandwidth of the to-be-received data, the total frequency hopping bandwidth, and a product of the quantity of retransmission times and the frequency hopping offset.

Further, the processor 21 is specifically configured to: determine whether the maximum quantity of retransmission times is not greater than 2; and if the maximum quantity of retransmission times is not greater than 2 and a current retransmission subframe belongs to a first time subset, determine the first start location according to the initial frequency hopping location and the total frequency hopping bandwidth; or if the maximum quantity of retransmission times is not greater than 2 and a current retransmission subframe belongs to a second time subset, determine the first start location according to the initial frequency hopping location, the bandwidth of the to-be-received data, and the total frequency hopping bandwidth; or if the maximum quantity of retransmission times is greater than 2 and a current retransmission subframe belongs to a first time subset, determine the first start location from a relatively low frequency location to a relatively high frequency location according to the initial frequency hopping location, the bandwidth of the to-be-received data, the total frequency hopping bandwidth, and a product of the quantity of retransmission times and the frequency hopping offset; or if the maximum quantity of retransmission times is greater than 2 and a current retransmission subframe belongs to a second time subset, determine the first start location from a relatively high frequency location to a relatively low frequency location according to the initial frequency hopping location, the bandwidth of the to-be-received data, the total frequency hopping bandwidth, and a product of the quantity of retransmission times and the frequency hopping offset.

Further, the first time subset and the second time subset are the same or different.

Further, the first time subset and the second time subset include any one of the following time subsets:

a time set including an even subframe;
a time set including an odd subframe;
a time set including a subframe corresponding to a subframe index when a sum of the quantity of retransmission times of the to-be-received data and the subframe index is an even number;
a time set including a subframe corresponding to a subframe index when a sum of the quantity of retransmission times of the to-be-received data and the subframe index is an odd number; or
a time set including all subframes.

Further, the processor 21 is specifically configured to determine the first start location based on an existing formula for calculating a frequency hopping frequency domain location and according to the initial frequency hopping location, the bandwidth of the to-be-received data, the total frequency hopping bandwidth, and a product of the quantity of retransmission times and the frequency hopping offset.

Further, the processor 21 is specifically configured to: obtain a frequency hopping function according to the quantity of retransmission times, where the frequency hopping function is a calculation factor in an existing formula for calculating a frequency hopping frequency domain location; and determine the first start location according to the frequency hopping function, the frequency hopping parameter, and a product of the quantity of retransmission times and the frequency hopping offset.

Further, the processor 21 is further configured to: generate a random sequence in the frequency hopping function according to the quantity of retransmission times, so as to obtain the frequency hopping function corresponding to the quantity of retransmission times; or generate, according to the quantity of retransmission times, a location in which a random sequence in the frequency hopping function is read, so as to obtain the frequency hopping function corresponding to the quantity of retransmission times.

Further, the total frequency hopping bandwidth is a dedicated bandwidth used during data transmission, and the processor 21 is specifically configured to determine, within a range of the dedicated bandwidth, the first start location of the to-be-received data according to the quantity of retransmission times of the to-be-received data and the frequency hopping parameter, and map the first start location to a physical resource of a system bandwidth.

Further, the receiving module 33 is further configured to receive, within the range of the dedicated bandwidth, signaling used to indicate the initial frequency hopping location.

The device shown in FIG. 14 may further be applicable to another method embodiment, that is, the processor 21 is configured to: determine a frequency hopping parameter, where the frequency hopping parameter includes an initial frequency hopping location, a bandwidth of to-be-received data, and a total frequency hopping bandwidth; and determine a first start location of the to-be-received data according to the frequency hopping parameter; and the receiver 22 is configured to receive, according to the first start location and the bandwidth of the to-be-received data, the to-be-received data sent by a first device.

Further, the processor 21 is specifically configured to: if a current retransmission subframe belongs to a first time subset, determine the first start location of the to-be-received data according to the initial frequency hopping location and the total frequency hopping bandwidth; or if a current retransmission subframe belongs to a second time subset, determine the first start location of the to-be-received data according to the initial frequency hopping location, the bandwidth of the to-be-received data, and the total frequency hopping bandwidth.

Further, the frequency hopping parameter further includes a maximum quantity of retransmission times of the to-be-received data, and the processor 21 is specifically configured to: determine whether the maximum quantity of retransmission times is not greater than 2; and if the maximum quantity of retransmission times is not greater than 2 and a current retransmission subframe belongs to a first time subset, determine the first start location according to the initial frequency hopping location and the total frequency hopping bandwidth, or if the maximum quantity of retransmission times is not greater than 2 and a current retransmission subframe belongs to a second time subset, determine the first start location according to the initial frequency hopping location, the bandwidth of the to-be-received data, and the total frequency hopping bandwidth.

Further, the total frequency hopping bandwidth is a dedicated bandwidth used during data transmission, and the processor 21 is specifically configured to determine, within a range of the dedicated bandwidth, the first start location of the to-be-received data according to the frequency hopping parameter, and map the first start location to a physical resource of a system bandwidth.

Further, the receiver 22 is further configured to receive, within the range of the dedicated bandwidth, signaling used to indicate the initial frequency hopping location.

In the several embodiments provided in the present invention, it should be understood that the disclosed device and method may be implemented in other manners. For example, the described device embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor to perform a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

It may be clearly understood by a person skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or part of the functions described above. For a detailed working process of the foregoing device, reference may be made to a corresponding process in the foregoing method embodiments, and details are not described herein again.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the invention, as defined by the appended claims.

**Claims**

1. A data transmission method for device-to-device communications performed by a first device (11), the method comprising the steps of:

   • determining a frequency hopping parameter and a maximum quantity of retransmission times Nm of to-be-transmitted data, wherein the frequency hopping parameter comprises:

      ◦ an initial frequency hopping location comprising a first start location $n_{VRB,1}$ at which a frequency hopping over first subframes starts, the first subframes having corresponding subframe indices forming a first set, Set 1, and comprising a second start location $n_{VRB,2}$ at which a frequency hopping over second subframes starts, the second subframes having corresponding subframe indices forming a second set, Set 2,
      ◦ wherein in a first alternative:

         the Set 1 includes even subframe indices and Set 2 includes odd subframe indices,
         or
         wherein in a second alternative:
         the Set 1 includes odd subframe indices and Set 2 includes even subframe indices,

      ◦ a bandwidth $N_{D2D\text{-}Tx\_BW}$ of the to-be-transmitted data configured for use during a data transmission in a device to device, D2D communication between the first device and a second device,
      ◦ a frequency hopping offset $N_{offset}$,
      ◦ a total bandwidth $N_{RB}^{D2D}$ configured for use during the D2D communication between the first device and the second device (step 301);

   • determining for each subframe of the Set 1 and the Set 2 a first start location for the to-be-transmitted data according to the following formula:

$$n_{PRB}(i) = \begin{cases} \left( n_{VRB,1} + mN_{offset} \right) \bmod \left( N_{RB}^{D2D} \right) & i \in Set1 \\ \left( N_{RB}^{D2D} - 1 - n_{VRB,2} - N_{D2D\text{-}Tx\_BW} - mN_{offset} \right) \bmod \left( N_{RB}^{D2D} \right) & i \in Set2 \end{cases}$$

   wherein $n_{PRB}(i)$ indicates a location of the to-be-transmitted data within an i-th subframe, m indicates a current quantity of retransmissions of the to-be transmitted data and is a value from 0 to Nm-1 and Nm is the maximum quantity of retransmission times of the to be transmitted data, thereby determining multiple first start locations, (step 302)
   • sending the to-be-transmitted data Nm times on those subframes having subframe indices of the Set 1 and the Set 2 to the second device (12) at the multiple first start locations and with the bandwidth $N_{D2D\text{-}Tx\_BW}$ of the to-be-transmitted data, thereby performing the D2D communication with the second device.

2. A data transmission method for device-to-device communications performed by a first device (11), the method comprising the steps of:

  • determining a frequency hopping parameter and a maximum quantity of retransmission times Nm of to-be-transmitted data, wherein the frequency hopping parameter comprises:

    ○ an initial frequency hopping location comprising a first start location $n_{VRB,1}$ at which a frequency hopping over first subframes starts, the first subframes having corresponding subframe indices forming a first set, Set 1, and comprising a second start location $n_{VRB,2}$ at which a frequency hopping over second subframes starts, the second subframes having corresponding subframe indices forming a second set, Set 2,
    ○ wherein in a first alternative:

      the Set 1 includes even subframe indices and Set 2 includes odd subframe indices,
      or
      wherein in a second alternative:
      the Set 1 includes odd subframe indices and Set 2 includes even subframe indices,

    ○ a bandwidth $N_{D2D-Tx\_BW}$ of the to-be-transmitted data configured for use during a data transmission in a device to device, D2D communication between the first device and a second device,
    ○ a frequency hopping offset $N_{offset}$,
    ○ a total bandwidth $N_{RB}^{D2D}$ configured for use during the D2D communication between the first device and the second device (step 301);

  • determining for each subframe of the Set 1 and the Set 2 a first start location for the to-be-transmitted data according to the following formula:

$$n_{PRB}(i) = \begin{cases} \left(n_{VRB,1} + \lceil m/2 \rceil N_{offset}\right) \bmod \left(N_{RB}^{D2D}\right) & i \in Set1 \\ \left(N_{RB}^{D2D} - 1 - n_{VRB,2} - N_{D2D-Tx\_BW} - \lceil m/2 \rceil N_{offset}\right) \bmod \left(N_{RB}^{D2D}\right) & i \in Set2 \end{cases}$$

wherein $n_{PRB}(i)$ indicates a location of the to-be-transmitted data within an i-th subframe, m indicates a current quantity of retransmissions of the to-be transmitted data and is a value from 0 to (Nm-1) and Nm is the maximum quantity of retransmission times of the to be transmitted data, thereby determining multiple first start locations(step 302)
  • sending the to-be-transmitted data Nm times on those subframes having subframe indices of the Set 1 and the Set 2 to the second device (12) at the multiple first start locations and with the bandwidth $N_{D2D-Tx\_BW}$ of the to-be-transmitted data, thereby performing the D2D communication with the second device.

3. A data reception method for device-to-device communications performed by a second device (12), the method comprising:

  • determining a frequency hopping parameter and a maximum quantity of retransmission times Nm of to-be-received data, wherein the frequency hopping parameter comprises:

    ○ an initial frequency hopping location comprising a first start location $n_{VRB,1}$ at which a frequency hopping over first subframes starts, the first subframes having corresponding subframe indices forming a first set, Set 1, and comprising a second start location $n_{VRB,2}$ at which a frequency hopping over second subframes starts, the second subframes having corresponding subframe indices forming a second set, Set 2,
    ○ wherein in a first alternative:

      the Set 1 includes even subframe indices and Set 2 includes odd subframe indices,
      or
      wherein in a second alternative:
      the Set 1 includes odd subframe indices and Set 2 includes even subframe indices,

    ○ a bandwidth $N_{D2D-Tx\_BW}$ of the to-be-received data configured for use during a data transmission in a device to device, D2D communication between a first device and the second device,
- a frequency hopping offset $N_{offset}$,
- a total bandwidth $N_{RB}^{D2D}$ configured for use during the D2D communication between the first device and the second device (step 301);

- determining for each subframe of the Set 1 and the Set 2 a first start location for the to-be-received data according to the following formula:

$$n_{PRB}(i) = \begin{cases} \left(n_{VRB,1} + mN_{offset}\right)\bmod\left(N_{RB}^{D2D}\right) & i \in Set1 \\ \left(N_{RB}^{D2D} - 1 - n_{VRB,2} - N_{D2D-Tx\_BW} - mN_{offset}\right)\bmod\left(N_{RB}^{D2D}\right) & i \in Set2 \end{cases}.$$

wherein $n_{PRB}(i)$ indicates a location of the to-be-received data within an i-th subframe, m indicates a current quantity of retransmissions of to-be transmitted data received at the second device (12) as the to-be-received data and m is a value from 0 to (Nm-1) and Nm is the maximum quantity of retransmission times of the to-be-transmitted data at the first device (11), thereby determining multiple first start locations(step 302),receiving from the first device (n)the to-be-received data Nm -times on the those subframes having subframe indices of the Set 1 and the Set 2 at the multiple first start locations and received on the bandwidth $N_{D2D-Tx\_BW}$, thereby performing the D2D communication with the first device (11) (step 403).

4.  A data reception method for device-to-device communications performed by a second device (12), the method comprising:

- determining a frequency hopping parameter and a maximum quantity of retransmission times Nm of to-be-received data, wherein the frequency hopping parameter comprises:

- an initial frequency hopping location comprising a first start location $n_{VRB,1}$ at which a frequency hopping over first subframes starts, the first subframes having corresponding subframe indices forming a first set, Set 1, and comprising a second start location $n_{VRB,2}$ at which a frequency hopping over second subframes starts, the second subframes having corresponding subframe indices forming a second set, Set 2,
- wherein in a first alternative:

    the Set 1 includes even subframe indices and Set 2 includes odd subframe indices,
    or
    wherein in a second alternative:
    the Set 1 includes odd subframe indices and Set 2 includes even subframe indices,

- a bandwidth $n_{D2D-TX\_BW}$ of the to-be-received data configured for use during a data transmission in a device to device, D2D communication between a first device and the second device,
- a frequency hopping offset $N_{offset}$,
- a total bandwidth $N_{RB}^{D2D}$ configured for use during the D2D communication between the first device and the second device (step 301);

- determining for each subframe of the Set 1 and the Set 2 a first start location for the to-be-received data according to the following formula:

$$n_{PRB}(i) = \begin{cases} \left(n_{VRB,1} + \lceil m/2 \rceil N_{offset}\right)\bmod\left(N_{RB}^{D2D}\right) & i \in Set1 \\ \left(N_{RB}^{D2D} - 1 - n_{VRB,2} - N_{D2D-Tx\_BW} - \lceil m/2 \rceil N_{offset}\right)\bmod\left(N_{RB}^{D2D}\right) & i \in Set2 \end{cases},$$

wherein $n_{PRB}(i)$ indicates a location of the to-be-received data within an i-th subframe, m indicates a current quantity of retransmissions at the first device (11) of to-be-transmitted data received at the second device (12) as the to-be-received data and m is a value from 0 to Nm-1 and Nm is the maximum quantity of retransmission times at the first device (11) of the to-be-transmitted data, thereby determining multiple first start locations(step 302),
• receiving from the first device (11) the to-be-received data Nm times on the those subframes having subframe indices of the Set 1 and the Set 2 at the multiple first start locations and received on the bandwidth $N_{D2D\text{-}Tx\_BW}$, thereby performing the D2D communication with the first device (11) (step 403).

5. A device-to-device data transmission apparatus (11) comprising:

• a first determining module configured to determine a frequency hopping parameter and a maximum quantity of retransmission times Nm of to-be-transmitted data, wherein the frequency hopping parameter comprises:

  ◦ an initial frequency hopping location comprising a first start location $n_{VRB,1}$ at which a frequency hopping over first subframes starts, the first subframes having corresponding subframe indices forming a first set, Set 1 , and comprising a second start location $n_{VRB,2}$ at which a frequency hopping over second subframes starts, the second subframes having corresponding subframe indices forming a second set, Set 2 ,
  ◦ wherein in a first alternative: the Set 1 includes even subframe indices and Set 2 includes odd subframe indices, or wherein in a second alternative: the Set 1 includes odd subframe indices and Set 2 includes even subframe indices,
  ◦ a bandwidth $N_{D2D\text{-}Tx\_Bw}$ of the to-be-transmitted data configured for use during a data transmission in a device to device, D2D communication between the apparatus and a second device
  ◦ a frequency hopping offset $N_{offset,}$
  ◦ a total bandwidth $n_{RB}^{D2D}$ configured for use during the D2D communication between the first device and the second device;

• a second determining module configured to determine for each subframe of the Set 1 and the Set 2 a first start location for the to-be-transmitted data according to the following formula:

$$n_{PRB}(i)=\begin{cases}\left(n_{VRB,1}+\lceil m/2\rceil N_{offset}\right)\mathrm{mod}\left(N_{RB}^{D2D}\right) & i\in Set1\\\left(N_{RB}^{D2D}-1-n_{VRB,2}-N_{D2D\text{-}Tx\_BW}-\lceil m/2\rceil N_{offset}\right)\mathrm{mod}\left(N_{RB}^{D2D}\right) & i\in Set2\end{cases},$$

wherein $n_{PRB}(i)$ indicates a location of the to-be-transmitted data within an i-th subframe, m indicates a current quantity of retransmissions of the to-be transmitted data and is a value from 0 to (Nm-1), and Nm is the maximum quantity of retransmission times of the to-be-transmitted data, thereby determining multiple first start locations,
• a sending module configured to send the to-be-transmitted data Nm times on those subframes having subframe indices of the Set 1 and the Set 2 to the second device (12) at the multiple first start locations and with the bandwidth $N_{D2D\text{-}Tx\_BW}$ of the to-be-transmitted data, thereby performing the D2D communication with the second device.

6. A device-to-device data transmission apparatus (11) comprising:

• a first determining module configured to determine a frequency hopping parameter and a maximum quantity of retransmission times Nm of to-be-transmitted data, wherein the frequency hopping parameter comprises:

  ◦ an initial frequency hopping location comprising a first start location $n_{VRB,1}$ at which a frequency hopping over first subframes starts, the first subframes having corresponding subframe indices forming a first set, Set 1 , and comprising a second start location $n_{VRB,2}$ at which a frequency hopping over second subframes starts, the second subframes having corresponding subframe indices forming a second set, Set 2 ,
  ◦ wherein in a first alternative: the Set 1 includes even subframe indices and Set 2 includes odd subframe indices, or wherein in a second alternative: the Set 1 includes odd subframe indices and Set 2 includes even subframe indices,
  ◦ a bandwidth $N_{D2D\text{-}Tx\_BW}$ of the to-be-transmitted data configured for use during a data transmission in a device to device, D2D communication between the apparatus and a second device
  ◦ a frequency hopping offset $N_{offset}$,
  ◦ a total bandwidth $n_{RB}^{D2D}$ configured for use during the D2D communication between the first device and the second device;

• a second determining module configured to determine for each subframe of the Set 1 and the Set 2 a first start location for the to-be-transmitted data according to the following formula:

$$n_{PRB}(i) = \begin{cases} \left(n_{VRB,1} + mN_{offset}\right) \mod\left(N_{RB}^{D2D}\right) & i \in Set1 \\ \left(N_{RB}^{D2D} - 1 - n_{VRB,2} - N_{D2D-Tx\_BW} - mN_{offset}\right) \mod\left(N_{RB}^{D2D}\right) & i \in Set2 \end{cases},$$

wherein $n_{PRB}(i)$ indicates a location of the to-be-transmitted data within an i-th subframe, m indicates a current quantity of retransmissions of the to-be transmitted data and is a value from 0 to (Nm-1), and Nm is the maximum quantity of retransmission times of the to-be-transmitted data, thereby determining multiple first start locations,
• a sending module configured to send the to-be-transmitted data Nm times on those subframes having subframe indices of the Set 1 and the Set 2 to the second device (12) at the multiple first start locations and with the bandwidth $N_{D2D-Tx\_BW}$ of the to-be-transmitted data, thereby performing the D2D communication with the second device.

7.  A device-to-device data reception apparatus (12) comprising:

  • a first determining module configured to determine a frequency hopping parameter and a maximum quantity of retransmission times Nm of to-be-received data, wherein the frequency hopping parameter comprises:

    ◦ an initial frequency hopping location comprising a first start location $n_{VRB,1}$ at which a frequency hopping over first subframes starts, the first subframes having corresponding subframe indices forming a first set, Set 1 , and comprising a second start location $n_{VRB,2}$ at which a frequency hopping over second subframes starts, the second subframes having corresponding subframe indices forming a second set, Set 2 ,
    ◦ wherein in a first alternative: the Set 1 includes even subframe indices and Set 2 includes odd subframe indices, or wherein in a second alternative: the Set 1 includes odd subframe indices and Set 2 includes even subframe indices,
    ◦ a bandwidth $N_{D2D-Tx\_BW}$ of the to-be-received data configured for use during a data transmission in a device to device, D2D communication between the apparatus and a first device (11)
    ◦ a frequency hopping offset $N_{offset,}$
    ◦ a total bandwidth $n_{RB}^{D2D}$ configured for use during the D2D communication between the first device and the second device;

  • a second determining module configured to determine for each subframe of the Set 1 and the Set 2 a first start location for the to-be-transmitted data according to the following formula:

$$n_{PRB}(i) = \begin{cases} \left(n_{VRB,1} + mN_{offset}\right) \mod\left(N_{RB}^{D2D}\right) & i \in Set1 \\ \left(N_{RB}^{D2D} - 1 - n_{VRB,2} - N_{D2D-Tx\_BW} - mN_{offset}\right) \mod\left(N_{RB}^{D2D}\right) & i \in Set2 \end{cases},$$

wherein $n_{PRB}(i)$ indicates a location of the to-be-received data within an i-th subframe, m indicates a current quantity of retransmissions of the to-be transmitted data and is a value from 0 to (Nm-1), and Nm is the maximum quantity of retransmission times of the to-be-received data, thereby determining multiple first start locations,
• a receiving module configured to receive the to-be-received data Nm times on those subframes having subframe indices of the Set 1 and the Set 2 from the first device (11) at the multiple first start locations and with the bandwidth $N_{D2D-T\_BW}$ of the to-be-received data, thereby performing the D2D communication with the first device.

8.  A device-to-device data reception apparatus (12) comprising:

  • a first determining module configured to determine a frequency hopping parameter and a maximum quantity of retransmission times Nm of to-be-received data, wherein the frequency hopping parameter comprises:

    ◦ an initial frequency hopping location comprising a first start location $n_{VRB,1}$ at which a frequency hopping over first subframes starts, the first subframes having corresponding subframe indices forming a first set, Set 1 , and comprising a second start location $n_{VRB,2}$ at which a frequency hopping over second subframes starts, the second subframes having corresponding subframe indices forming a second set, Set 2 ,

◦ wherein in a first alternative: the Set 1 includes even subframe indices and Set 2 includes odd subframe indices, or wherein in a second alternative: the Set 1 includes odd subframe indices and Set 2 includes even subframe indices,

◦ a bandwidth $N_{D2D\text{-}Tx\_BW}$ of the to-be-received data configured for use during a data transmission in a device to device, D2D communication between the apparatus and a first device (11)

◦ a frequency hopping offset $N_{offset}$,

◦ a total bandwidth $n_{RB}^{D2D}$ configured for use during the D2D communication between the first device and the second device;

• a second determining module configured to determine for each subframe of the Set 1 and the Set 2 a first start location for the to-be-transmitted data according to the following formula:

$$n_{PRB}(i) = \begin{cases} \left(n_{VRB,1} + \lceil m/2 \rceil N_{offset}\right) \bmod\left(N_{RB}^{D2D}\right) & i \in Set1 \\ \left(N_{RB}^{D2D} - 1 - n_{VRB,2} - N_{D2D\text{-}Tx\_BW} - \lceil m/2 \rceil N_{offset}\right) \bmod\left(N_{RB}^{D2D}\right) & i \in Set2 \end{cases},$$

wherein $n_{PRB}(i)$ indicates a location of the to-be-received data within an i-th subframe, m indicates a current quantity of retransmissions of the to-be transmitted data and is a value from 0 to (Nm-1), and Nm is the maximum quantity of retransmission times of the to-be-received data, thereby determining multiple first start locations,

• a receiving module configured to receive the to-be-received data Nm times on those subframes having subframe indices of the Set 1 and the Set 2 from the first device (11) at the multiple first start locations and with the bandwidth $N_{D2D\text{-}Tx\_BW}$ of the to-be-received data, thereby performing the D2D communication with the first device.

## Patentansprüche

1. Datenübertragungsverfahren zur Vorrichtung-zu-Vorrichtung-Kommunikation, die durch eine erste Vorrichtung (11) durchgeführt wird, das Verfahren die folgenden Schritte umfassend:

• Bestimmen eines Frequenzsprungparameters und einer maximalen Quantität von Wiederholungsübertragungs-Zeitpunkten $N_m$ von Daten, die übertragen werden sollen, wobei der Frequenzsprungparameter Folgendes umfasst:

◦ einen anfänglichen Frequenzsprungort, der einen ersten Startort $n_{VRB,1}$ umfasst, bei dem ein Frequenzsprung über erste Subrahmen beginnt, wobei die ersten Subrahmen entsprechende Subrahmenindices aufweisen, die eine erste Menge, Menge 1, ausbilden, und der einen zweiten Startort $n_{VRB,2}$ umfasst, bei dem ein Frequenzsprung über zweite Subrahmen beginnt, wobei die zweiten Subrahmen entsprechende Subrahmenindices aufweisen, die eine zweite Menge, Menge 2, ausbilden,

◦ wobei bei einer ersten Alternative:

die Menge 1 gerade Subrahmenindices umfasst und die Menge 2 ungerade Subrahmenindices umfasst, oder

wobei bei einer zweiten Alternative:

die Menge 1 ungerade Subrahmenindices umfasst und die Menge 2 gerade Subrahmenindices umfasst,

◦ eine Bandbreite $N_{D2D\text{-}Tx\_BW}$ der Daten, die übertragen werden sollen, die zur Verwendung während einer Datenübertragung in einer Vorrichtung-zu-Vorrichtung-, D2D-Kommunikation zwischen der ersten Vorrichtung und einer zweiten Vorrichtung konfiguriert ist,

◦ einen Frequenzsprungversatz $N_{offset}$,

◦ eine Gesamtbandbreite $N_{RB}^{D2D}$, die zur Verwendung während der D2D-Kommunikation zwischen der ersten Vorrichtung und der zweiten Vorrichtung konfiguriert ist (Schritt 301);

• Bestimmen für jeden Subrahmen der Menge 1 und der Menge 2 eines ersten Startorts für die Daten, die übertragen werden sollen, gemäß der folgenden Formel:

$$n_{PRB}(i) = \begin{cases} (n_{VRB,1} + mN_{offset})mod(N_{RB}^{D2D}) & i \in Menge1 \\ (N_{RB}^{D2D} - 1 - n_{VRB,2} - N_{D2D-Tx\_BW} - mN_{offset})mod(N_{RB}^{D2D}) & i \in Menge2 \end{cases}$$

wobei $n_{PRB}(i)$ einen Ort der Daten, die übertragen werden sollen, innerhalb eines i-ten Subrahmens angibt, m eine aktuelle Quantität von Wiederholungsübertragungen der Daten, die übertragen werden sollen, angibt und ein Wert von 0 bis $N_m$-1 ist, und $N_m$ die maximale Quantität von Wiederholungsübertragungs-Zeitpunkten der Daten, die übertragen werden sollen, ist, wodurch mehrere erste Startorte bestimmt werden, (Schritt 302)
• Senden der Daten, die übertragen werden sollen, $N_m$ mal auf denjenigen Subrahmen, die Subrahmenindices der Menge 1 und der Menge 2 aufweisen, an die zweite Vorrichtung (12) auf den mehreren ersten Startorten und mit der Bandbreite $N_{D2D-Tx\_BW}$ der Daten, die übertragen werden sollen, wodurch die D2D-Kommunikation mit der zweiten Vorrichtung durchgeführt wird.

2. Datenübertragungsverfahren zur Vorrichtung-zu-Vorrichtung-Kommunikation, die durch eine erste Vorrichtung (11) durchgeführt wird, das Verfahren die folgenden Schritte umfassend:

• Bestimmen eines Frequenzsprungparameters und einer maximalen Quantität von Wiederholungsübertragungs-Zeitpunkten $N_m$ von Daten, die übertragen werden sollen, wobei der Frequenzsprungparameter Folgendes umfasst:

◦ einen anfänglichen Frequenzsprungort, der einen ersten Startort $n_{VRB,1}$ umfasst, bei dem ein Frequenzsprung über erste Subrahmen beginnt, wobei die ersten Subrahmen entsprechende Subrahmenindices aufweisen, die eine erste Menge, Menge 1, ausbilden, und der einen zweiten Startort $n_{VRB,2}$ umfasst, bei dem ein Frequenzsprung über zweite Subrahmen beginnt, wobei die zweiten Subrahmen entsprechende Subrahmenindices aufweisen, die eine zweite Menge, Menge 2, ausbilden,
◦ wobei bei einer ersten Alternative:

die Menge 1 gerade Subrahmenindices umfasst und die Menge 2 ungerade Subrahmenindices umfasst, oder
wobei bei einer zweiten Alternative:
die Menge 1 ungerade Subrahmenindices umfasst und die Menge 2 gerade Subrahmenindices umfasst,

◦ eine Bandbreite $N_{D2D-Tx\_BW}$ der Daten, die übertragen werden sollen, die zur Verwendung während einer Datenübertragung in einer Vorrichtung-zu-Vorrichtung-, D2D-Kommunikation zwischen der ersten Vorrichtung und einer zweiten Vorrichtung konfiguriert ist,
◦ einen Frequenzsprungversatz $N_{offset}$,
◦ eine Gesamtbandbreite $N_{RB}^{D2D}$, die zur Verwendung während der D2D-Kommunikation zwischen der ersten Vorrichtung und der zweiten Vorrichtung konfiguriert ist (Schritt 301);

• Bestimmen für jeden Subrahmen der Menge 1 und der Menge 2 eines ersten Startorts für die Daten, die übertragen werden sollen, gemäß der folgenden Formel:

$$n_{PRB}(i) = \begin{cases} (n_{VRB,1} + [m/2]N_{offset})mod(N_{RB}^{D2D}) & i \in Menge\ 1 \\ (N_{RB}^{D2D} - 1 - n_{VRB,2} - N_{D2D-Tx\_BW} - [m/2]N_{offset})mod(N_{RB}^{D2D}) & i \in Menge\ 2 \end{cases}$$

wobei $n_{PRB}(i)$ einen Ort der Daten, die übertragen werden sollen, innerhalb eines i-ten Subrahmens angibt, m eine aktuelle Quantität von Wiederholungsübertragungen der Daten, die übertragen werden sollen, angibt und ein Wert von 0 bis $N_m$-1 ist, und $N_m$ die maximale Quantität von Wiederholungsübertragungs-Zeitpunkten der Daten, die übertragen werden sollen, ist, wodurch mehrere erste Startorte bestimmt werden, (Schritt 302)
• Senden der Daten, die übertragen werden sollen, $N_m$ mal auf denjenigen Subrahmen, die Subrahmenindices der Menge 1 und der Menge 2 aufweisen, an die zweite Vorrichtung (12) auf den mehreren ersten Startorten und mit der Bandbreite $N_{D2D-Tx\_BW}$ der Daten, die übertragen werden sollen, wodurch die D2D-Kommunikation mit der zweiten Vorrichtung durchgeführt wird.

3. Datenempfangsverfahren zur Vorrichtung-zu-Vorrichtung-Kommunikation, die durch eine zweite Vorrichtung (12) durchgeführt wird, das Verfahren die folgenden Schritte umfassend:

• Bestimmen eines Frequenzsprungparameters und einer maximalen Quantität von Wiederholungsübertragungs-Zeitpunkten $N_m$ von Daten, die empfangen werden sollen, wobei der Frequenzsprungparameter Folgendes umfasst:

∘ einen anfänglichen Frequenzsprungort, der einen ersten Startort $n_{VRB,1}$ umfasst, bei dem ein Frequenzsprung über erste Subrahmen beginnt, wobei die ersten Subrahmen entsprechende Subrahmenindices aufweisen, die eine erste Menge, Menge 1, ausbilden, und der einen zweiten Startort $n_{VRB,2}$ umfasst, bei dem ein Frequenzsprung über zweite Subrahmen beginnt, wobei die zweiten Subrahmen entsprechende Subrahmenindices aufweisen, die eine zweite Menge, Menge 2, ausbilden,
∘ wobei bei einer ersten Alternative:

die Menge 1 gerade Subrahmenindices umfasst und die Menge 2 ungerade Subrahmenindices umfasst, oder
wobei bei einer zweiten Alternative:
die Menge 1 ungerade Subrahmenindices umfasst und die Menge 2 gerade Subrahmenindices umfasst,

∘ eine Bandbreite $N_{D2D-Tx\_BW}$ der Daten, die empfangen werden sollen, die zur Verwendung während einer Datenübertragung in einer Vorrichtung-zu-Vorrichtung-, D2D-Kommunikation zwischen einer ersten Vorrichtung und der zweiten Vorrichtung konfiguriert ist,
∘ einen Frequenzsprungversatz $N_{offset}$,
∘ eine Gesamtbandbreite $N_{RB}^{D2D}$, die zur Verwendung während der D2D-Kommunikation zwischen der ersten Vorrichtung und der zweiten Vorrichtung konfiguriert ist (Schritt 301);

• Bestimmen für jeden Subrahmen der Menge 1 und der Menge 2 eines ersten Startorts für die Daten, die empfangen werden sollen, gemäß der folgenden Formel:

$$
n_{PRB}(i) = \begin{cases} \left(n_{VRB,1} + mN_{offset}\right) mod\left(N_{RB}^{D2D}\right) & i \in Menge\ 1 \\ \left(N_{RB}^{D2D} - 1 - n_{VRB,2} - N_{D2D-Tx\_BW} - mN_{offset}\right) mod\left(N_{RB}^{D2D}\right) & i \in Menge\ 2 \end{cases}
$$

wobei $n_{PRB}(i)$ einen Ort der Daten, die empfangen werden sollen, innerhalb eines i-ten Subrahmens angibt, m eine aktuelle Quantität von Wiederholungsübertragungen der Daten, die übertragen werden sollen und die an der zweiten Vorrichtung (12) als die Daten, die empfangen werden sollen, empfangen wurden, angibt, und m ein Wert von 0 bis $N_m$-1 ist, und $N_m$ die maximale Quantität von Wiederholungsübertragungs-Zeitpunkten der Daten, die übertragen werden sollen, an der ersten Vorrichtung (11) ist, wodurch mehrere erste Startorte bestimmt werden, (Schritt 302),
• Empfangen aus der ersten Vorrichtung (11) der Daten, die empfangen werden sollen, $N_m$ mal auf denjenigen Subrahmen, die Subrahmenindices der Menge 1 und der Menge 2 aufweisen, an den mehreren ersten Startorten, und die auf der Bandbreite $N_{D2D-Tx\_BW}$ empfangen werden, wodurch die D2D-Kommunikation mit der ersten Vorrichtung (11) durchgeführt wird (Schritt 403).

4. Datenempfangsverfahren zur Vorrichtung-zu-Vorrichtung-Kommunikation, die durch eine zweite Vorrichtung (12) durchgeführt wird, das Verfahren die folgenden Schritte umfassend:

• Bestimmen eines Frequenzsprungparameters und einer maximalen Quantität von Wiederholungsübertragungs-Zeitpunkten $N_m$ von Daten, die empfangen werden sollen, wobei der Frequenzsprungparameter Folgendes umfasst:

∘ einen anfänglichen Frequenzsprungort, der einen ersten Startort $n_{VRB,1}$ umfasst, bei dem ein Frequenzsprung über erste Subrahmen beginnt, wobei die ersten Subrahmen entsprechende Subrahmenindices aufweisen, die eine erste Menge, Menge 1, ausbilden, und der einen zweiten Startort $n_{VRB,2}$ umfasst, bei dem ein Frequenzsprung über zweite Subrahmen beginnt, wobei die zweiten Subrahmen entsprechende Subrahmenindices aufweisen, die eine zweite Menge, Menge 2, ausbilden,
◦ wobei bei einer ersten Alternative:

die Menge 1 gerade Subrahmenindices umfasst und die Menge 2 ungerade Subrahmenindices umfasst, oder
wobei bei einer zweiten Alternative:
die Menge 1 ungerade Subrahmenindices umfasst und die Menge 2 gerade Subrahmenindices umfasst,

◦ eine Bandbreite $N_{D2D\text{-}Tx\_BW}$ der Daten, die empfangen werden sollen, die zur Verwendung während einer Datenübertragung in einer Vorrichtung-zu-Vorrichtung-, D2D-Kommunikation zwischen einer ersten Vorrichtung und der zweiten Vorrichtung konfiguriert ist,
◦ einen Frequenzsprungversatz $N_{offset}$,
◦ eine Gesamtbandbreite $N_{RB}^{D2D}$, die zur Verwendung während der D2D-Kommunikation zwischen der ersten Vorrichtung und der zweiten Vorrichtung konfiguriert ist (Schritt 301);

• Bestimmen für jeden Subrahmen der Menge 1 und der Menge 2 eines ersten Startorts für die Daten, die empfangen werden sollen, gemäß der folgenden Formel:

$$n_{PRB}(i) = \begin{cases} \left(n_{VRB,1} + [m/2]N_{offset}\right)mod\left(N_{RB}^{D2D}\right) & i \in Menge\ 1 \\ \left(N_{RB}^{D2D} - 1 - n_{VRB,2} - N_{D2D-Tx\_BW} - [m/2]N_{offset}\right)mod\left(N_{RB}^{D2D}\right) & i \in Menge\ 2 \end{cases}$$

wobei $n_{PRB}(i)$ einen Ort der Daten, die empfangen werden sollen, innerhalb eines i-ten Subrahmens angibt, m eine aktuelle Quantität von Wiederholungsübertragungen an der ersten Vorrichtung (11) der Daten, die übertragen werden sollen und die an der zweiten Vorrichtung (12) als die Daten, die empfangen werden sollen, empfangen wurden, angibt, und m ein Wert von 0 bis $N_m$-1 ist, und $N_m$ die maximale Quantität von Wiederholungsübertragungs-Zeitpunkten der Daten, die übertragen werden sollen, an der ersten Vorrichtung (11) ist, wodurch mehrere erste Startorte bestimmt werden, (Schritt 302),
• Empfangen aus der ersten Vorrichtung (11) der Daten, die empfangen werden sollen, $N_m$ mal auf denjenigen Subrahmen, die Subrahmenindices der Menge 1 und der Menge 2 aufweisen, an den mehreren ersten Startorten, und die auf der Bandbreite $N_{D2D\text{-}Tx\_BW}$ empfangen werden, wodurch die D2D-Kommunikation mit der ersten Vorrichtung (11) durchgeführt wird (Schritt 403).

5. Vorrichtung-zu-Vorrichtung-Datenübertragungsgerät (11), Folgendes umfassend:

• ein erstes Bestimmungsmodul, das konfiguriert ist, einen Frequenzsprungparameter und eine maximale Quantität von Wiederholungsübertragungs-Zeitpunkten $N_m$ von Daten, die übertragen werden sollen, zu bestimmen, wobei der Frequenzsprungparameter Folgendes umfasst:

◦ einen anfänglichen Frequenzsprungort, der einen ersten Startort $n_{VRB,1}$ umfasst, bei dem ein Frequenzsprung über erste Subrahmen beginnt, wobei die ersten Subrahmen entsprechende Subrahmenindices aufweisen, die eine erste Menge, Menge 1, ausbilden, und der einen zweiten Startort $n_{VRB,2}$ umfasst, bei dem ein Frequenzsprung über zweite Subrahmen beginnt, wobei die zweiten Subrahmen entsprechende Subrahmenindices aufweisen, die eine zweite Menge, Menge 2, ausbilden,
◦ wobei bei einer ersten Alternative: die Menge 1 gerade Subrahmenindices umfasst und die Menge 2 ungerade Subrahmenindices umfasst, oder wobei bei einer zweiten Alternative: die Menge 1 ungerade Subrahmenindices umfasst und die Menge 2 gerade Subrahmenindices umfasst,
◦ eine Bandbreite $N_{D2D\text{-}Tx\_BW}$ der Daten, die übertragen werden sollen, die zur Verwendung während einer Datenübertragung in einer Vorrichtung-zu-Vorrichtung-, D2D-Kommunikation zwischen dem Gerät und einer zweiten Vorrichtung konfiguriert ist,
◦ einen Frequenzsprungversatz $N_{offset}$,
◦ eine Gesamtbandbreite $n_{RB}^{D2D}$, die zur Verwendung während der D2D-Kommunikation zwischen der ersten Vorrichtung und der zweiten Vorrichtung konfiguriert ist;

• ein zweites Bestimmungsmodul, das konfiguriert ist, für jeden Subrahmen der Menge 1 und der Menge 2 einen ersten Startort für die Daten, die übertragen werden sollen, gemäß der folgenden Formel zu bestimmen:

$$n_{PRB}(i) = \begin{cases} \left(n_{VRB,1} + [m/2]N_{offset}\right)mod(N_{RB}^{D2D}) & i \in Menge\ 1 \\ \left(N_{RB}^{D2D} - 1 - n_{VRB,2} - N_{D2D-Tx\_BW} - [m/2]N_{offset}\right)mod(N_{RB}^{D2D}) & i \in Menge\ 2 \end{cases}$$

wobei $n_{PRB}(i)$ einen Ort der Daten, die übertragen werden sollen, innerhalb eines i-ten Subrahmens angibt, m eine aktuelle Quantität von Wiederholungsübertragungen der Daten, die übertragen werden sollen, angibt und ein Wert von 0 bis $(N_m-1)$ ist, und $N_m$ die maximale Quantität von Wiederholungsübertragungs-Zeitpunkten der Daten, die übertragen werden sollen, ist, wodurch mehrere erste Startorte bestimmt werden,
• ein Sendemodul, das konfiguriert ist, die Daten, die übertragen werden sollen, $N_m$ mal auf denjenigen Subrahmen, die Subrahmenindices der Menge 1 und der Menge 2 aufweisen, an die zweite Vorrichtung (12) auf den mehreren ersten Startorten und mit der Bandbreite $N_{D2D-Tx\_BW}$ der Daten, die übertragen werden sollen, zu senden, wodurch die D2D-Kommunikation mit der zweiten Vorrichtung durchgeführt wird.

6. Vorrichtung-zu-Vorrichtung-Datenübertragungsgerät (11), Folgendes umfassend:

• ein erstes Bestimmungsmodul, das konfiguriert ist, einen Frequenzsprungparameter und eine maximale Quantität von Wiederholungsübertragungs-Zeitpunkten $N_m$ von Daten, die übertragen werden sollen, zu bestimmen, wobei der Frequenzsprungparameter Folgendes umfasst:

◦ einen anfänglichen Frequenzsprungort, der einen ersten Startort $n_{VRB,1}$ umfasst, bei dem ein Frequenzsprung über erste Subrahmen beginnt, wobei die ersten Subrahmen entsprechende Subrahmenindices aufweisen, die eine erste Menge, Menge 1, ausbilden, und der einen zweiten Startort $n_{VRB,2}$ umfasst, bei dem ein Frequenzsprung über zweite Subrahmen beginnt, wobei die zweiten Subrahmen entsprechende Subrahmenindices aufweisen, die eine zweite Menge, Menge 2, ausbilden,
◦ wobei bei einer ersten Alternative: die Menge 1 gerade Subrahmenindices umfasst und die Menge 2 ungerade Subrahmenindices umfasst, oder wobei bei einer zweiten Alternative: die Menge 1 ungerade Subrahmenindices umfasst und die Menge 2 gerade Subrahmenindices umfasst,
◦ eine Bandbreite $N_{D2D-Tx\_BW}$ der Daten, die übertragen werden sollen, die zur Verwendung während einer Datenübertragung in einer Vorrichtung-zu-Vorrichtung-, D2D-Kommunikation zwischen dem Gerät und einer zweiten Vorrichtung konfiguriert ist,
◦ einen Frequenzsprungversatz $N_{offset}$,
◦ eine Gesamtbandbreite $n_{RB}^{D2D}$, die zur Verwendung während der D2D-Kommunikation zwischen der ersten Vorrichtung und der zweiten Vorrichtung konfiguriert ist;

• ein zweites Bestimmungsmodul, das konfiguriert ist, für jeden Subrahmen der Menge 1 und der Menge 2 einen ersten Startort für die Daten, die übertragen werden sollen, gemäß der folgenden Formel zu bestimmen:

$$n_{PRB}(i) = \begin{cases} \left(n_{VRB,1} + mN_{offset}\right)mod(N_{RB}^{D2D}) & i \in Menge\ 1 \\ \left(N_{RB}^{D2D} - 1 - n_{VRB,2} - N_{D2D-Tx\_BW} - mN_{offset}\right)mod(N_{RB}^{D2D}) & i \in Menge\ 2 \end{cases}$$

wobei $n_{PRB}(i)$ einen Ort der Daten, die übertragen werden sollen, innerhalb eines i-ten Subrahmens angibt, m eine aktuelle Quantität von Wiederholungsübertragungen der Daten, die übertragen werden sollen, angibt und ein Wert von 0 bis $(N_m-1)$ ist, und $N_m$ die maximale Quantität von Wiederholungsübertragungs-Zeitpunkten der Daten, die übertragen werden sollen, ist, wodurch mehrere erste Startorte bestimmt werden,
• ein Sendemodul, das konfiguriert ist, die Daten, die übertragen werden sollen, $N_m$ mal auf denjenigen Subrahmen, die Subrahmenindices der Menge 1 und der Menge 2 aufweisen, an die zweite Vorrichtung (12) auf den mehreren ersten Startorten und mit der Bandbreite $N_{D2D-Tx\_BW}$ der Daten, die übertragen werden sollen, zu senden, wodurch die D2D-Kommunikation mit der zweiten Vorrichtung durchgeführt wird.

7. Vorrichtung-zu-Vorrichtung-Datenempfangsgerät (12), Folgendes umfassend:

• ein erstes Bestimmungsmodul, das konfiguriert ist, einen Frequenzsprungparameter und eine maximale Quantität von Wiederholungsübertragungs-Zeitpunkten $N_m$ von Daten, die empfangen werden sollen, zu bestimmen, wobei der Frequenzsprungparameter Folgendes umfasst:

◦ einen anfänglichen Frequenzsprungort, der einen ersten Startort $n_{VRB,1}$ umfasst, bei dem ein Frequenzsprung über erste Subrahmen beginnt, wobei die ersten Subrahmen entsprechende Subrahmenindices aufweisen, die eine erste Menge, Menge 1, ausbilden, und der einen zweiten Startort $n_{VRB,2}$ umfasst, bei dem ein Frequenzsprung über zweite Subrahmen beginnt, wobei die zweiten Subrahmen entsprechende Subrahmenindices aufweisen, die eine zweite Menge, Menge 2, ausbilden,
◦ wobei bei einer ersten Alternative: die Menge 1 gerade Subrahmenindices umfasst und die Menge 2 ungerade Subrahmenindices umfasst, oder wobei bei einer zweiten Alternative: die Menge 1 ungerade Subrahmenindices umfasst und die Menge 2 gerade Subrahmenindices umfasst,
◦ eine Bandbreite $N_{D2D-Tx\_BW}$ der Daten, die empfangen werden sollen, die zur Verwendung während einer Datenübertragung in einer Vorrichtung-zu-Vorrichtung-, D2D-Kommunikation zwischen dem Gerät und einer ersten Vorrichtung (11) konfiguriert ist,
◦ einen Frequenzsprungversatz $N_{offset}$,
◦ eine Gesamtbandbreite $n_{RB}^{D2D}$, die zur Verwendung während der D2D-Kommunikation zwischen der ersten Vorrichtung und der zweiten Vorrichtung konfiguriert ist;

• ein zweites Bestimmungsmodul, das konfiguriert ist, für jeden Subrahmen der Menge 1 und der Menge 2 einen ersten Startort für die Daten, die übertragen werden sollen, gemäß der folgenden Formel zu bestimmen:

$$n_{PRB}(i) = \begin{cases} \left(n_{VRB,1} + mN_{offset}\right)mod\left(N_{RB}^{D2D}\right) & i \in Menge\ 1 \\ \left(N_{RB}^{D2D} - 1 - n_{VRB,2} - N_{D2D-Tx\_BW} - mN_{offset}\right)mod\left(N_{RB}^{D2D}\right) & i \in Menge\ 2 \end{cases}$$

wobei $n_{PRB}(i)$ einen Ort der Daten, die empfangen werden sollen, innerhalb eines i-ten Subrahmens angibt, m eine aktuelle Quantität von Wiederholungsübertragungen der Daten, die übertragen werden sollen, angibt und ein Wert von 0 bis ($N_m$-1) ist, und $N_m$ die maximale Quantität von Wiederholungsübertragungs-Zeitpunkten der Daten, die empfangen werden sollen, ist, wodurch mehrere erste Startorte bestimmt werden,
• ein Empfangsmodul, das konfiguriert ist, die Daten, die empfangen werden sollen, $N_m$ mal auf denjenigen Subrahmen, die Subrahmenindices der Menge 1 und der Menge 2 aufweisen, von der ersten Vorrichtung (11) auf den mehreren ersten Startorten und mit der Bandbreite $N_{D2D-Tx\_BW}$ der Daten, die empfangen werden sollen, zu empfangen, wodurch die D2D-Kommunikation mit der ersten Vorrichtung durchgeführt wird.

8. Vorrichtung-zu-Vorrichtung-Datenempfangsgerät (12), Folgendes umfassend:

• ein erstes Bestimmungsmodul, das konfiguriert ist, einen Frequenzsprungparameter und eine maximale Quantität von Wiederholungsübertragungs-Zeitpunkten $N_m$ von Daten, die empfangen werden sollen, zu bestimmen, wobei der Frequenzsprungparameter Folgendes umfasst:

◦ einen anfänglichen Frequenzsprungort, der einen ersten Startort $n_{VRB,1}$ umfasst, bei dem ein Frequenzsprung über erste Subrahmen beginnt, wobei die ersten Subrahmen entsprechende Subrahmenindices aufweisen, die eine erste Menge, Menge 1, ausbilden, und der einen zweiten Startort $n_{VRB,2}$ umfasst, bei dem ein Frequenzsprung über zweite Subrahmen beginnt, wobei die zweiten Subrahmen entsprechende Subrahmenindices aufweisen, die eine zweite Menge, Menge 2, ausbilden,
◦ wobei bei einer ersten Alternative: die Menge 1 gerade Subrahmenindices umfasst und die Menge 2 ungerade Subrahmenindices umfasst, oder wobei bei einer zweiten Alternative: die Menge 1 ungerade Subrahmenindices umfasst und die Menge 2 gerade Subrahmenindices umfasst,
◦ eine Bandbreite $N_{D2D-Tx\_BW}$ der Daten, die empfangen werden sollen, die zur Verwendung während einer Datenübertragung in einer Vorrichtung-zu-Vorrichtung-, D2D-Kommunikation zwischen dem Gerät und einer ersten Vorrichtung (11) konfiguriert ist,
◦ einen Frequenzsprungversatz $N_{offset}$,
◦ eine Gesamtbandbreite $n_{RB}^{D2D}$, die zur Verwendung während der D2D-Kommunikation zwischen der ersten Vorrichtung und der zweiten Vorrichtung konfiguriert ist;

• ein zweites Bestimmungsmodul, das konfiguriert ist, für jeden Subrahmen der Menge 1 und der Menge 2 einen ersten Startort für die Daten, die übertragen werden sollen, gemäß der folgenden Formel zu bestimmen:

$$n_{PRB}(i) = \begin{cases} \left(n_{VRB,1} + [m/2]N_{offset}\right)mod(N_{RB}^{D2D}) & i \in Menge\ 1 \\ \left(N_{RB}^{D2D} - 1 - n_{VRB,2} - N_{D2D-Tx\_BW} - [m/2]N_{offset}\right)mod(N_{RB}^{D2D}) & i \in Menge\ 2 \end{cases}$$

wobei $n_{PRB}(i)$ einen Ort der Daten, die empfangen werden sollen, innerhalb eines i-ten Subrahmens angibt, m eine aktuelle Quantität von Wiederholungsübertragungen der Daten, die übertragen werden sollen, angibt und ein Wert von 0 bis ($N_m$-1) ist, und $N_m$ die maximale Quantität von Wiederholungsübertragungs-Zeitpunkten der Daten, die empfangen werden sollen, ist, wodurch mehrere erste Startorte bestimmt werden,
• ein Empfangsmodul, das konfiguriert ist, die Daten, die empfangen werden sollen, $N_m$ mal auf denjenigen Subrahmen, die Subrahmenindices der Menge 1 und der Menge 2 aufweisen, von der ersten Vorrichtung (11) auf den mehreren ersten Startorten und mit der Bandbreite $N_{D2D-Tx\_BW}$ der Daten, die empfangen werden sollen, zu empfangen, wodurch die D2D-Kommunikation mit der ersten Vorrichtung durchgeführt wird.

**Revendications**

1. Procédé de transmission de données pour des communications de dispositif à dispositif mises en œuvre par un premier dispositif (11), le procédé comprenant les étapes consistant à :

• déterminer un paramètre de saut de fréquence et une quantité maximale de nombre de retransmissions Nm de données à transmettre, dans lequel le paramètre de saut de fréquence comprend :

◦ un emplacement de saut de fréquence initial comprenant un premier emplacement de départ $n_{VRB,1}$ auquel commence un saut de fréquence sur des premières sous-trames, les premières sous-trames ayant des indices de sous-trame correspondants formant un premier ensemble, Ensemble 1, et comprenant un second emplacement de départ $n_{VRB,2}$ auquel commence un saut de fréquence sur des secondes sous-trames, les secondes sous-trames ayant des indices de sous-trame correspondants formant un second ensemble, Ensemble 2,
◦ dans lequel, dans une première alternative :

l'Ensemble 1 comprend des indices de sous-trame pairs et l'Ensemble 2 comprend des indices de sous-trame impairs,
ou

◦ dans lequel, dans une seconde alternative :
l'Ensemble 1 comprend des indices de sous-trame impairs et l'Ensemble 2 comprend des indices de sous-trame pairs,
◦ une bande passante $N_{D2D-Tx\_BW}$ des données à transmettre configurée pour être utilisée lors d'une transmission de données dans une communication de dispositif à dispositif, D2D (device to device), entre le premier dispositif et un second dispositif,
◦ un décalage de saut de fréquence $N_{offset}$,
◦ une bande passante totale $N_{RB}^{D2D}$ configurée pour être utilisée pendant la communication D2D entre le premier dispositif et le second dispositif (étape 301) ;

• déterminer, pour chaque sous-trame de l'Ensemble 1 et de l'Ensemble 2, un premier emplacement de départ pour les données à transmettre, selon la formule suivante :

$$n_{PRB}(i) = \begin{cases} \left(n_{VRB,1} + mN_{offset}\right)\mathrm{mod}\left(N_{RB}^{D2D}\right) & i \in Ensemble\ 1 \\ \left(N_{RB}^{D2D} - 1 - n_{VRB,2} - N_{D2D-Tx\_BW} - mN_{offset}\right)\mathrm{mod}\left(N_{RB}^{D2D}\right) & i \in Ensemble\ 2 \end{cases}$$
,

où $n_{PRB}(i)$ indique un emplacement des données à transmettre dans une ième sous-trame, m indique un nombre actuel de retransmissions des données à transmettre et est une valeur comprise entre 0 et Nm-1, et Nm est la quantité maximale du nombre de retransmissionss des données à transmettre, déterminant ainsi de multiples premiers emplacements de départ (étape 302),

• envoyer les données à transmettre Nm fois sur ces sous-trames ayant des indices de sous-trame de l'Ensemble 1 et de l'Ensemble 2, au second dispositif (12) au niveau des multiples premiers emplacements de départ et avec la bande passante $N_{D2D-Tx\_BW}$ des données à transmettre, effectuant ainsi la communication D2D avec le second dispositif.

2. Procédé de transmission de données pour des communications de dispositif à dispositif mises en œuvre par un premier dispositif (11), le procédé comprenant les étapes consistant à :

• déterminer un paramètre de saut de fréquence et une quantité maximale de nombre de retransmissions Nm de données à transmettre, dans lequel le paramètre de saut de fréquence comprend :

○ un emplacement de saut de fréquence initial comprenant un premier emplacement de départ $n_{VRB,1}$, auquel commence un saut de fréquence sur des premières sous-trames, les premières sous-trames ayant des indices de sous-trame correspondants formant un premier ensemble, Ensemble 1, et comprenant un second emplacement de départ $n_{VRB,\ 2}$, auquel commence un saut de fréquence sur les secondes sous-trames, les secondes sous-trames ayant des indices de sous-trame correspondants formant un second ensemble, Ensemble 2,
○ dans lequel, dans une première alternative :
l'Ensemble 1 comprend des indices de sous-trame pairs et l'Ensemble 2 comprend des indices de sous-trame impairs, ou
○ dans lequel, dans une seconde alternative :
l'Ensemble 1 comprend des indices de sous-trame impairs et l'Ensemble 2 comprend des indices de sous-trame pairs,
○ une bande passante $N_{D2D-Tx\_BW}$ des données à transmettre configurée pour être utilisée lors d'une transmission de données dans une communication de dispositif à dispositif, D2D, entre le premier dispositif et un second dispositif,
○ un décalage de saut de fréquence $N_{offset}$,
○ une bande passante totale $N_{RB}^{D2D}$ configurée pour être utilisée pendant la communication D2D entre le premier dispositif et le second dispositif (étape 301) ;

• déterminer, pour chaque sous-trame de l'Ensemble 1 et de l'Ensemble 2, un premier emplacement de départ pour les données à transmettre, selon la formule suivante :

$$n_{PRB}(i) = \begin{cases} \left(n_{VRB,1} + \lceil m/2 \rceil N_{offset}\right) \bmod \left(N_{RB}^{D2D}\right) & i \in Ensemble\ 1 \\ \left(N_{RB}^{D2D} - 1 - n_{VRB,2} - N_{D2D-Tx\_BW} - \lceil m/2 \rceil N_{offset}\right) \bmod \left(N_{RB}^{D2D}\right) & i \in Ensemble\ 2 \end{cases},$$

où $n_{PRB}(i)$ indique un emplacement des données à transmettre dans une ième sous-trame, m indique un nombre actuel de retransmissions des données à transmettre et est une valeur comprise entre 0 et Nm-1, et Nm est la quantité maximale du nombre de retransmissionss des données à transmettre, déterminant ainsi de multiples premiers emplacements de départ (étape 302),

• envoyer les données à transmettre Nm fois sur ces sous-trames ayant des indices de sous-trame de l'Ensemble 1 et de l'Ensemble 2, au second dispositif (12) au niveau des multiples premiers emplacements de départ et avec la bande passante $N_{D2D-Tx\_BW}$ des données à transmettre, assurant ainsi la communication D2D avec le second dispositif.

3. Procédé de réception de données pour des communications de dispositif à dispositif mises en œuvre par un second dispositif (12), le procédé comprenant les étapes consistant à :

• déterminer un paramètre de saut de fréquence et une quantité maximale de nombre de retransmissions Nm de données à recevoir, dans lequel le paramètre de saut de fréquence comprend :

◦ un emplacement de saut de fréquence initial comprenant un premier emplacement de départ $n_{VRB,1}$, auquel commence un saut de fréquence sur des premières sous-trames, les premières sous-trames ayant des indices de sous-trame correspondants formant un premier ensemble, Ensemble 1, et comprenant un second emplacement de départ $n_{VRB,2}$, auquel commence un saut de fréquence sur des secondes sous-trames, les secondes sous-trames ayant des indices de sous-trame correspondants formant un second ensemble, Ensemble 2,
◦ dans lequel, dans une première alternative :

l'Ensemble 1 comprend des indices de sous-trame pairs et l'Ensemble 2 comprend des indices de sous-trame impairs,
ou

◦ dans lequel, dans une seconde alternative :
l'Ensemble 1 comprend des indices de sous-trame impairs et l'Ensemble 2 comprend des indices de sous-trame pairs,
◦ une bande passante $N_{D2D-Tx\_BW}$ des données à recevoir configurées pour être utilisées pendant une transmission de données dans une communication de dispositif à dispositif, D2D entre un premier dispositif et le second dispositif,
◦ un décalage de saut de fréquence $N_{offset}$,

◦ une bande passante totale $N_{RB}^{D2D}$ configurée pour être utilisée pendant la communication D2D entre le premier dispositif et le second dispositif (étape 301) ;

• déterminer, pour chaque sous-trame de l'Ensemble 1 et de l'Ensemble 2, un premier emplacement de départ pour les données à recevoir, selon la formule suivante :

$$n_{PRB}(i) = \begin{cases} \left( n_{VRB,1} + mN_{offset} \right) \mod \left( N_{RB}^{D2D} \right) & i \in Ensemble\ 1 \\ \left( N_{RB}^{D2D} - 1 - n_{VRB,2} - N_{D2D-Tx\_BW} - mN_{offset} \right) \mod \left( N_{RB}^{D2D} \right) & i \in Ensemble\ 2 \end{cases}$$

, ,

où $n_{PRB}(i)$ indique un emplacement des données à recevoir dans une ième sous-trame, m indique un nombre actuel de retransmissions de données à transmettre reçues au niveau du second dispositif (12) en tant que données à recevoir et m est une valeur comprise entre 0 et Nm-1, et Nm est la quantité maximale du nombre de retransmissionss des données à transmettre au niveau du premier dispositif (11), déterminant ainsi de multiples premiers emplacements de départ (étape 302), recevant du premier dispositif (11) les données à recevoir Nm fois sur ces sous-trames ayant des indices de sous-trame de l'Ensemble 1 et de l'Ensemble 2 au niveau des multiples premiers emplacements de départ et reçues sur la bande passante $N_{D2D-Tx\_BW}$, réalisant ainsi la communication D2D avec le premier dispositif (11) (étape 403).

4. Procédé de réception de données pour des communications de dispositif à dispositif mises en œuvre par un second dispositif (12), le procédé comprenant les étapes consistant à :

• déterminer un paramètre de saut de fréquence et une quantité maximale de nombre de retransmissions Nm de données à recevoir, dans lequel le paramètre de saut de fréquence comprend :

◦ un emplacement de saut de fréquence initial comprenant un premier emplacement de départ $n_{VRB,1}$ auquel commence un saut de fréquence sur des premières sous-trames, les premières sous-trames ayant des indices de sous-trame correspondants formant un premier ensemble, Ensemble 1, et comprenant un second emplacement de départ $n_{VRB,2}$ auquel commence un saut de fréquence sur des secondes sous-trames, les secondes sous-trames ayant des indices de sous-trame correspondants formant un second ensemble, Ensemble 2,
◦ dans lequel, dans une première alternative :

l'Ensemble 1 comprend des indices de sous-trame pairs et l'Ensemble 2 comprend des indices de sous-trame impairs,

ou

◦ dans lequel, dans une seconde alternative :
l'Ensemble 1 comprend des indices de sous-trame impairs et l'Ensemble 2 comprend des indices de sous-trame pairs,
◦ une bande passante $N_{D2D\text{-}Tx\_BW}$ des données à recevoir configurée pour être utilisée lors d'une transmission de données dans une communication de dispositif à dispositif, D2D, entre un premier dispositif et le second dispositif,
◦ un décalage de saut de fréquence $N_{offset}$,
◦ une bande passante totale $N_{RB}^{D2D}$ configurée pour être utilisée pendant la communication D2D entre le premier dispositif et le second dispositif (étape 301) ;

• déterminer, pour chaque sous-trame de l'Ensemble 1 et de l'Ensemble 2, un premier emplacement de départ pour les données à recevoir, selon la formule suivante :

$$n_{PRB}(i) = \begin{cases} \left(n_{VRB,1} + \lceil m/2 \rceil N_{offset}\right)\bmod\left(N_{RB}^{D2D}\right) & i \in \text{Ensemble } 1 \\ \left(N_{RB}^{D2D} - 1 - n_{VRB,2} - N_{D2D\text{-}Tx\_BW} - \lceil m/2 \rceil N_{offset}\right)\bmod\left(N_{RB}^{D2D}\right) & i \in \text{Ensemble } 2 \end{cases},$$

où $n_{PRB}(i)$ indique un emplacement des données à recevoir dans une ième sous-trame, m indique un nombre actuel de retransmissions au niveau du premier dispositif (11) de données à transmettre au niveau du second dispositif (12) en tant que données à recevoir et m est une valeur comprise entre 0 et Nm-1, et Nm est la quantité maximale du nombre de retransmissions au niveau du premier dispositif (11) des données à transmettre, déterminant ainsi de multiples premiers emplacements de départ (étape 302),
• recevoir du premier dispositif (11) les données à recevoir Nm fois sur ces sous-trames ayant des indices de sous-trame de l'Ensemble 1 et de l'Ensemble 2 au niveau de multiples premiers emplacements de départ et reçues sur la bande passante $N_{D2D\text{-}Tx\_BW}$, réalisant ainsi la communication D2D avec le premier dispositif (11) (étape 403).

5. Appareil de transmission de données (11) de dispositif à dispositif comprenant :

• un premier module de détermination configuré pour déterminer un paramètre de saut de fréquence et une quantité maximale de nombre de retransmissions Nm de données à transmettre, dans lequel le paramètre de saut de fréquence comprend :

o un emplacement de saut de fréquence initial comprenant un premier emplacement de départ $n_{VRB,1}$ auquel commence un saut de fréquence sur des premières sous-trames, les premières sous-trames ayant des indices de sous-trame correspondants formant un premier ensemble, Ensemble 1, et comprenant un second emplacement de départ $n_{VRB,2}$ auquel commence un saut de fréquence sur des secondes sous-trames, les secondes sous-trames ayant des indices de sous-trame correspondants formant un second ensemble, Ensemble 2,
◦ dans lequel, dans une première alternative : l'Ensemble 1 comprend des indices de sous-trame pairs et l'Ensemble 2 comprend des indices de sous-trame impairs, ou dans lequel, dans une seconde alternative : l'Ensemble 1 comprend des indices de sous-trame impairs et l'Ensemble 2 comprend des indices de sous-trame pairs,
◦ une bande passante $N_{D2D\text{-}Tx\_BW}$ des données à transmettre configurée pour être utilisée lors d'une transmission de données dans une communication de dispositif à dispositif, D2D, entre l'appareil et un second dispositif,
◦ un décalage de saut de fréquence $N_{offset}$,
◦ une bande passante totale $N_{RB}^{D2D}$ configurée pour être utilisée pendant la communication D2D entre le premier dispositif et le second dispositif ;

• un second module de détermination, configuré pour déterminer, pour chaque sous-trame de l'Ensemble 1 et de l'Ensemble 2, un premier emplacement de départ pour les données à transmettre, selon la formule suivante :

$$n_{PRB}(i) = \begin{cases} \left(n_{VRB,1} + \lceil m/2 \rceil N_{offset}\right) \bmod\left(N_{RB}^{D2D}\right) & i \in Ensemble\ 1 \\ \left(N_{RB}^{D2D} - 1 - n_{VRB,2} - N_{D2D-Tx\_BW} - \lceil m/2 \rceil N_{offset}\right) \bmod\left(N_{RB}^{D2D}\right) & i \in Ensemble\ 2 \end{cases}$$
,

où $n_{PRB}(i)$ indique un emplacement des données à transmettre dans une ième sous-trame, m indique un nombre actuel de retransmissions des données à transmettre et est une valeur comprise entre 0 et (Nm-1), et Nm est la quantité maximale du nombre de retransmissionss des données à transmettre, déterminant ainsi de multiples premiers emplacements de départ,

• un module d'envoi configuré pour envoyer les données à transmettre Nm fois sur ces sous-trames ayant des indices de sous-trame de l'Ensemble 1 et de l'Ensemble 2, au second dispositif (12) au niveau des multiples premiers emplacements de départ et avec la bande passante $N_{D2D-Tx\_BW}$ des données à transmettre, assurant ainsi la communication D2D avec le second dispositif.

**6.** Appareil de transmission de données (11) de dispositif à dispositif comprenant :

• un premier module de détermination configuré pour déterminer un paramètre de saut de fréquence et une quantité maximale de nombre de retransmissions Nm de données à transmettre, dans lequel le paramètre de saut de fréquence comprend :

◦ un emplacement de saut de fréquence initial comprenant un premier emplacement de départ $n_{VRB,1}$ auquel commence un saut de fréquence sur des premières sous-trames, les premières sous-trames ayant des indices de sous-trame correspondants formant un premier ensemble, Ensemble 1, et comprenant un second emplacement de départ $n_{VRB,2}$ auquel commence un saut de fréquence sur des secondes sous-trames, les secondes sous-trames ayant des indices de sous-trame correspondants formant un second ensemble, Ensemble 2,

◦ dans lequel, dans une première alternative : l'Ensemble 1 comprend des indices de sous-trame pairs et l'Ensemble 2 comprend des indices de sous-trame impairs, ou dans lequel, dans une seconde alternative : l'Ensemble 1 comprend des indices de sous-trame impairs et l'Ensemble 2 comprend des indices de sous-trame pairs,

◦ une bande passante $N_{D2D-Tx\_BW}$ des données à transmettre configurée pour être utilisée lors d'une transmission de données dans une communication de dispositif à dispositif, D2D, entre l'appareil et un second dispositif,

◦ un décalage de saut de fréquence $N_{offset}$,

◦ une bande passante totale $n_{RB}^{D2D}$ configurée pour être utilisée pendant la communication D2D entre le premier dispositif et le second dispositif ;

• un second module de détermination configuré pour déterminer, pour chaque sous-trame de l'Ensemble 1 et de l'Ensemble 2, un premier emplacement de départ pour les données à transmettre, selon la formule suivante :

$$n_{PRB}(i) = \begin{cases} \left(n_{VRB,1} + mN_{offset}\right) \bmod\left(N_{RB}^{D2D}\right) & i \in Ensemble\ 1 \\ \left(N_{RB}^{D2D} - 1 - n_{VRB,2} - N_{D2D-Tx\_BW} - mN_{offset}\right) \bmod\left(N_{RB}^{D2D}\right) & i \in Ensemble\ 2 \end{cases}$$
,

où $n_{PRB}(i)$ indique un emplacement des données à transmettre dans une ième sous-trame, m indique un nombre actuel de retransmissions des données à transmettre et est une valeur comprise entre 0 et (Nm-1), et Nm est la quantité maximale du nombre de retransmissionss des données à transmettre, déterminant ainsi de multiples premiers emplacements de départ,

• un module d'envoi configuré pour envoyer les données à transmettre Nm fois sur ces sous-trames ayant des indices de sous-trame de l'Ensemble 1 et de l'Ensemble 2, au second dispositif (12) au niveau des multiples premiers emplacements de départ et avec la bande passante $N_{D2D-Tx\_BW}$ des données à transmettre, assurant ainsi la communication D2D avec le second dispositif.

7.  Appareil de réception de données (12) de dispositif à dispositif comprenant :

• un premier module de détermination configuré pour déterminer un paramètre de saut de fréquence et une quantité maximale de nombre de retransmissions Nm de données à recevoir, dans lequel le paramètre de saut de fréquence comprend :

◦ un emplacement de saut de fréquence initial comprenant un premier emplacement de départ $n_{VRB,1}$ auquel commence un saut de fréquence sur des premières sous-trames, les premières sous-trames ayant des indices de sous-trame correspondants formant un premier ensemble, Ensemble 1, et comprenant un second emplacement de départ $n_{VRB,2}$ auquel commence un saut de fréquence sur des secondes sous-trames, les secondes sous-trames ayant des indices de sous-trame correspondants formant un second ensemble, Ensemble 2,
◦ dans lequel, dans une première alternative : l'Ensemble 1 comprend des indices de sous-trame pairs et l'Ensemble 2 comprend des indices de sous-trame impairs, ou dans lequel, dans une seconde alternative : l'Ensemble 1 comprend des indices de sous-trame impairs et l'Ensemble 2 comprend des indices de sous-trame pairs,
◦ une bande passante $N_{D2D\text{-}Tx\_BW}$ des données à recevoir configurée pour être utilisée lors d'une transmission de données dans une communication de dispositif à dispositif, D2D, entre l'appareil et un premier dispositif (11),
◦ un décalage de saut de fréquence $N_{offset}$,
◦ une bande passante totale $N_{RB}^{D2D}$ configurée pour être utilisée pendant la communication D2D entre le premier dispositif et le second dispositif ;

• un second module de détermination configuré pour déterminer, pour chaque sous-trame de l'Ensemble 1 et de l'Ensemble 2, un premier emplacement de départ pour les données à transmettre, selon la formule suivante :

$$n_{PRB}(i) = \begin{cases} \left( n_{VRB,1} + mN_{offset} \right) \bmod \left( N_{RB}^{D2D} \right) & i \in Ensemble\ 1 \\ \left( N_{RB}^{D2D} - 1 - n_{VRB,2} - N_{D2D\text{-}Tx\_BW} - mN_{offset} \right) \bmod \left( N_{RB}^{D2D} \right) & i \in Ensemble\ 2 \end{cases},$$

où $n_{PRB}(i)$ indique un emplacement des données à recevoir dans une ième sous-trame, m indique un nombre actuel de retransmissions des données à transmettre et est une valeur comprise entre 0 et (Nm-1), et Nm est la quantité maximale du nombre de retransmissionss des données à recevoir, déterminant ainsi de multiples premiers emplacements de départ,
• un module de réception configuré pour recevoir les données à recevoir Nm fois sur ces sous-trames ayant des indices de sous-trame de l'Ensemble 1 et de l'Ensemble 2, du premier dispositif (11) au niveau des multiples premiers emplacements de départ et avec la bande passante $N_{D2D\text{-}Tx\_BW}$ des données à recevoir, assurant ainsi la communication D2D avec le premier dispositif.

8.  Appareil de réception de données (12) de dispositif à dispositif comprenant :

• un premier module de détermination configuré pour déterminer un paramètre de saut de fréquence et une quantité maximale de nombre de retransmissions Nm de données à recevoir, dans lequel le paramètre de saut de fréquence comprend :

◦ un emplacement de saut de fréquence initial comprenant un premier emplacement de départ $n_{VRB,1}$ auquel commence un saut de fréquence sur des premières sous-trames, les premières sous-trames ayant des indices de sous-trame correspondants formant un premier ensemble, Ensemble 1, et comprenant un second emplacement de départ $n_{VRB,2}$ auquel commence un saut de fréquence sur des secondes sous-trames, les secondes sous-trames ayant des indices de sous-trame correspondants formant un second ensemble, Ensemble 2,

∘ dans lequel, dans une première alternative : l'Ensemble 1 comprend des indices de sous-trame pairs et l'Ensemble 2 comprend des indices de sous-trame impairs, ou dans lequel, dans une seconde alternative : l'Ensemble 1 comprend des indices de sous-trame impairs et l'Ensemble 2 comprend des indices de sous-trame pairs,

∘ une bande passante $N_{D2D-Tx\_BW}$ des données à recevoir configurée pour être utilisée lors d'une transmission de données dans une communication de dispositif à dispositif, D2D, entre l'appareil et un premier dispositif (11),

∘ un décalage de saut de fréquence $N_{offset}$,

∘ une bande passante totale $n_{RB}^{D2D}$ configurée pour être utilisée pendant la communication D2D entre le premier dispositif et le second dispositif ;

• un second module de détermination configuré pour déterminer, pour chaque sous-trame de l'Ensemble 1 et de l'Ensemble 2, un premier emplacement de départ pour les données à transmettre, selon la formule suivante :

$$n_{PRB}(i) = \begin{cases} \left(n_{VRB,1} + \lceil m/2 \rceil N_{offset}\right) \mathrm{mod}\left(N_{RB}^{D2D}\right) & i \in \text{Ensemble 1} \\ \left(N_{RB}^{D2D} - 1 - n_{VRB,1} - N_{D2D-Tx\_BW} - \lceil m/2 \rceil N_{offset}\right) \mathrm{mod}\left(N_{RB}^{D2D}\right) & i \in \text{Ensemble 2} \end{cases},$$

où $n_{PRB}(i)$ indique un emplacement des données à recevoir dans une ième sous-trame, m indique un nombre actuel de retransmissions des données à transmettre et est une valeur comprise entre 0 et (Nm-1), et Nm est la quantité maximale du nombre de retransmissionss des données à recevoir, déterminant ainsi de multiples premiers emplacements de départ,

• un module de réception configuré pour recevoir les données à recevoir Nm fois sur ces sous-trames ayant des indices de sous-trame de l'Ensemble 1 et de l'Ensemble 2, du premier dispositif (11) au niveau des multiples premiers emplacements de départ et avec la bande passante $N_{D2D-Tx\_BW}$ des données à recevoir, assurant ainsi la communication D2D avec le premier dispositif.

Base station

First
device

Second
device

Second
device

FIG. 1

| A first device determines a frequency hopping parameter and a quantity of retransmission times of to-be-transmitted data | 101 |

| The first device determines a first start location of the to-be-transmitted data according to the quantity of retransmission times of the to-be-transmitted data and the frequency hopping parameter | 102 |

| The first device sends the to-be-transmitted data to a second device according to the first start location and a bandwidth of the to-be-transmitted data | 103 |

FIG. 2

A first device determines a frequency hopping parameter and a quantity of retransmission times of to-be-transmitted data — 201

The first device determines, within a range of a dedicated bandwidth, a first start location of the to-be-transmitted data according to the quantity of retransmission times of the to-be-transmitted data and the frequency hopping parameter — 202

The first device maps the first start location to a physical resource of a system bandwidth — 203

The first device sends the to-be-transmitted data to a second device according to the first start location and the bandwidth of the to-be-transmitted data — 204

FIG. 3

Frequency domain locations on a dedicated bandwidth after frequency hopping

Physical bandwidth in the cellular system

Virtual D2D dedicated bandwidth

Frequency hopping operation

Map data obtained after frequency hopping to a physical bandwidth in a cellular system

Frequency domain locations on a system bandwidth after frequency hopping

FIG. 4

A first device determines a frequency hopping parameter ⟋ 301

The first device determines a first start location of to-be-transmitted data according to the frequency hopping parameter ⟋ 302

The first device sends the to-be-transmitted data to a second device according to the first start location and a bandwidth of the to-be-transmitted data ⟋ 303

FIG. 5

A second device determines a frequency hopping parameter and a quantity of retransmission times of to-be-received data ⟋ 401

The second device determines a first start location of the to-be-received data according to the quantity of retransmission times of the to-be-received data and the frequency hopping parameter ⟋ 402

The second device receives, according to the first start location and a bandwidth of the to-be-received data, the to-be-received data sent by a first device ⟋ 403

FIG. 6

A second device determines a frequency hopping parameter    501

The second device determines a first start location of to-be-received data according to the frequency hopping parameter    502

The second device receives, according to the first start location and a bandwidth of the to-be-received data, the to-be-received data sent by a first device    503

FIG. 7

First determining module    11

Second determining module    12

Sending module    13

FIG. 8

First determining module — 21

Second determining module — 22

Sending module — 23

FIG. 9

First determining module — 31

Second determining module — 32

Receiving module — 33

FIG. 10

42

First determining module ⌇ 41

Second determining module ⌇ 42

Receiving module ⌇ 43

FIG. 11

First device ⌇ 11

10 ⌇

Second device ⌇ 12

FIG. 12

Processor ⌇ 11

Transmitter ⌇ 12

FIG. 13

FIG. 14